(19) Europäisches Patentamt / European Patent Office / Office européen des brevets

(11) **EP 2 924 820 A1**

(12) **EUROPEAN PATENT APPLICATION**
published in accordance with Art. 153(4) EPC

(43) Date of publication:
**30.09.2015 Bulletin 2015/40**

(21) Application number: **13857076.7**

(22) Date of filing: **13.11.2013**

(51) Int Cl.:
*H01S 3/115* *(2006.01)*  *B23K 26/00* *(2014.01)*
*B23K 26/064* *(2014.01)*  *C03B 33/02* *(2006.01)*
*C03B 33/08* *(2006.01)*  *H01S 3/00* *(2006.01)*
*H01S 3/10* *(2006.01)*  *H01S 3/23* *(2006.01)*
*B23K 26/382* *(2014.01)*  *B23K 26/40* *(2014.01)*
*B28D 5/00* *(2006.01)*

(86) International application number:
**PCT/JP2013/080727**

(87) International publication number:
**WO 2014/080822 (30.05.2014 Gazette 2014/22)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **20.11.2012 JP 2012254475**

(71) Applicants:
• **Kyushu University,**
  **National University Corporation**
  **Fukuoka-shi, Fukuoka 812-8581 (JP)**
• **Gigaphoton Inc.**
  **Tochigi 323-8558 (JP)**

(72) Inventors:
• **IKENOUE, Hiroshi**
  **Fukuoka-shi, Fukuoka 812-8581 (JP)**
• **WAKABAYASHI, Osamu**
  **Oyama-shi, Tochigi 323-8558 (JP)**
• **MIZOGUCHI, Hakaru**
  **Oyama-shi, Tochigi 323-8558 (JP)**

(74) Representative: **Global IP Europe**
**Patentanwaltskanzlei**
**Pfarrstraße 14**
**80538 München (DE)**

(54) **LASER MACHINING APPARATUS AND LASER MACHINING METHOD**

(57) Included are a laser light source (10) configured to output pulsed laser light with an intensity peak in a wavelength range from 8 μm to 11 μm and a pulse width of 30 ns or less, an optical system (40) configured to condense the pulsed laser light toward a workpiece (70) and allow the workpiece to be irradiated with the condensed pulsed laser light, and a controller (60) configured to control a repetition frequency of the pulsed laser light that is to be outputted from the laser light source (10) to be 25 kHz or greater. This suppresses thermal diffusion and increases an absorption coefficient of a laser irradiated part of the workpiece (70), and suppresses a formed hole from being in a tapered shape and suppresses formation of uplifting around the hole upon performing of minute drilling.

[ FIG. 3 ]

EP 2 924 820 A1

## Description

## Technical Field

The disclosure relates to a laser processing apparatus and a laser processing method.

## Background Art

A glass material made of silica glass is inexpensive and transparent to visible light, and is advantageous in insulation resistance, chemical resistance, and heat resistance. The glass material makes it possible to decrease a substrate impurity concentration, and is well compatible with a semiconductor device manufacturing process. The glass material is thus used as a substrate material of a solar cell, a flat-panel display, etc. On the other hand, the glass is susceptible to generation of crack and is thus a material difficult to process. This makes microfabrication of the glass difficult, and its use in application fields where productivity is demanded is therefore limited to a field where a dimension is relatively large and linear processing is possible. Therefore, achieving highly-productive microfabrication thereof makes it possible to widely use the glass material for an interposer, MEMS (Micro Electro Mechanical Systems), etc., in micro-mounting, as well as to use the glass material for an optical component, an ornament, etc., which in turn widens its use.

Currently, one of the fields where glass processing, finest and lowest in damage, is demanded in a glass processing technique is dividing and cutting of a flat panel display, a solar cell substrate, etc. For such glass processing, a mechanical cutting method such as a blade dicing technique is mainly used. However, the mechanical dividing method leads to easier generation of crack and chipping around divided faces, resulting in a decrease in mechanical strength of a glass substrate. Also, in recent years, there has been a growing use of hard glass in which hardness of glass is increased for use in the flat panel display. In the case of the hard glass, it is serious in that break of the glass substrate, originating from the crack or the chipping on a processed surface, tends to occur easily.

In addition, processing in the dicing technique with use of a blade is limited to linear processing. Hence, it is not possible to perform drilling of a through hole of, for example, a glass interposer used for micro-mounting of a semiconductor device.

On the other hand, for purpose of reducing the generation of crack upon cutting, there is a glass cutting method in which far-infrared laser of continuous oscillation is used as a method of glass processing. The method irradiates a glass substrate with a far-infrared range laser light at a wavelength ranging from 9 μm to 11 μm where a thermal vibration mode of glass is excited, to generate local thermal strain on the glass substrate, and applies mechanical stress from outside to divide the substrate.

Another method irradiates a glass substrate with the laser in the far-infrared range to generate local thermal strain on the glass substrate, and causes expansion and contraction through feeding of water or the like to a region in which the thermal strain is generated for rapid cooling thereof to divide the substrate by means of a stress difference resulting from the expansion and contraction. These methods mainly use $CO_2$ laser of continuous oscillation, making it possible to increase laser output easily and suppress the generation of the crack or the chipping, and thus making it possible to increase productivity. However, because processing in each of the methods is limited to linear dividing, it is not possible to perform microfabrication such as drilling.

## Citation List

## Patent Literature

PTL1: Japanese Unexamined Patent Application Publication No. H11-217237
PTL2: Japanese Unexamined Patent Application Publication No. 2001-354439
PTL3: Japanese Unexamined Patent Application Publication No. 2002-28799
PTL4: Japanese Unexamined Patent Application Publication No. 2010-524692

## Summary

A laser processing apparatus may include: a laser light source configured to output pulsed laser light with an intensity peak in a wavelength range from 8 μm to 11 μm and a pulse width of 30 ns or less; an optical system configured to condense the pulsed laser light toward a workpiece and allow the workpiece to be irradiated with the condensed pulsed laser light; and a controller configured to control a repetition frequency of the pulsed laser light that is to be outputted from the laser light source to be 25 kHz or greater.

Also, a laser processing method may include: causing a laser light source to output pulsed laser light with an intensity peak in a wavelength range from 8 μm to 11 μm, a pulse width of 30 ns or less, and a repetition frequency in a range from 25 kHz to 200 kHz; and performing irradiation onto a workpiece with the pulsed laser light outputted from the laser light source, the workpiece being made of a material containing silicon dioxide.

## Brief Description of Drawings

Some embodiments of the disclosure are described below as mere examples with reference to the accompanying drawings.

[FIG. 1] FIG. 1 is a drawing for describing a problem in laser processing.

[FIG. 2] FIG. 2 is a correlation diagram of a wavelength of pulsed laser light versus an absorption coefficient where a temperature of a workpiece is varied.

[FIG. 3] FIG. 3 is a structural diagram of a laser processing apparatus of the disclosure.

[FIG. 4] FIG. 4 is an explanatory diagram (1) of laser processing in the laser processing apparatus of the disclosure.

[FIG. 5] FIG. 5 is an explanatory diagram (2) of the laser processing in the laser processing apparatus of the disclosure.

[FIG. 6] FIG. 6 is an explanatory diagram (3) of the laser processing in the laser processing apparatus of the disclosure.

[FIG. 7] FIG. 7 is an explanatory diagram (4) of the laser processing in the laser processing apparatus of the disclosure.

[FIG. 8] FIG. 8 is an optical microscopic image of a workpiece following the laser processing by the laser processing apparatus of the disclosure.

[FIG. 9] FIG. 9 is an omni-focus composite image of the workpiece following the laser processing by the laser processing apparatus of the disclosure.

[FIG. 10] FIG. 10 is an SEM image of the workpiece following the laser processing by the laser processing apparatus of the disclosure.

[FIG. 11] FIG. 11 is an explanatory diagram (5) of the laser processing in the laser processing apparatus of the disclosure.

[FIG. 12] FIG. 12 is a flowchart of a laser processing method of the disclosure.

[FIG. 13] FIG. 13 is a structural diagram of a short-pulse $CO_2$ laser light source.

[FIG. 14] FIG. 14 is an explanatory diagram (1) of the short-pulse $CO_2$ laser light source.

[FIG. 15] FIG. 15 is an explanatory diagram (2) of the short-pulse $CO_2$ laser light source.

[FIG. 16] FIG. 16 is a structural diagram of a short-pulse $CO_2$ laser light source that includes a wavelength selective element.

[FIG. 17] FIG. 17 is a diagram for describing the short-pulse $CO_2$ laser light source that includes the wavelength selective element.

[FIG. 18] FIG. 18 is a structural diagram of a short-pulse $CO_2$ laser light source that includes a quantum cascade laser.

[FIG. 19] FIG. 19 is a structural diagram (1) of a short-pulse $CO_2$ laser light source that outputs pieces of laser light of respective two wavelengths.

[FIG. 20] FIG. 20 is an explanatory diagram of the short-pulse $CO_2$ laser light source that outputs the pieces of laser light of respective two wavelengths.

[FIG. 21] FIG. 21 is a structural diagram (2) of the short-pulse $CO_2$ laser light source that outputs the pieces of laser light of respective two wavelengths.

[FIG. 22] FIG. 22 is a structural diagram of a short-pulse $CO_2$ laser light source that outputs laser light of two wavelengths with use of an etalon.

[FIG. 23] FIG. 23 is an explanatory diagram of the short-pulse $CO_2$ laser light source that outputs the laser light of two wavelengths with use of the etalon.

[FIG. 24] FIG. 24 is a structural diagram of a wavelength-variable solid-state laser light source.

[FIG. 25] FIG. 25 is a structural diagram of a laser processing apparatus of the disclosure that includes a heating section.

[FIG. 26] FIG. 26 is a flowchart of a laser processing method performed by the laser processing apparatus of the disclosure that includes the heating section.

[FIG. 27] FIG. 27 is an explanatory diagram (6) of the laser processing in the laser processing apparatus of the disclosure.

[FIG. 28] FIG. 28 is an explanatory diagram (7) of the laser processing in the laser processing apparatus of the disclosure.

[FIG. 29] FIG. 29 is a structural diagram of a laser processing apparatus of the disclosure that includes a wavelength-variable laser light source.

[FIG. 30] FIG. 30 is an explanatory diagram of the laser processing apparatus of the disclosure that includes the wavelength-variable laser light source.

[FIG. 31] FIG. 31 is a flowchart of a laser processing method performed by the laser processing apparatus of the disclosure that includes the wavelength-variable laser light source.

[FIG. 32] FIG. 32 is a structural diagram of a laser processing apparatus of the disclosure that includes a temperature measuring section.

[FIG. 33] FIG. 33 is an explanatory diagram of the laser processing apparatus of the disclosure that includes the temperature measuring section.

[FIG. 34] FIG. 34 is a flowchart of a laser processing method performed by the laser processing apparatus of the disclosure that includes the temperature measuring section.

[FIG. 35] FIG. 35 is a structural diagram of a laser processing apparatus of the disclosure that includes a laser light source configured to output pieces of laser light of respective two wavelengths.

[FIG. 36] FIG. 36 is a flowchart (1) of a laser processing method performed by the laser processing apparatus of the disclosure that includes the laser light source configured to output the pieces of laser light of respective two wavelengths.

[FIG. 37] FIG. 37 is an explanatory diagram (1) of the laser processing apparatus of the disclosure that includes the laser light source configured to output the pieces of laser light of respective two wavelengths.

[FIG. 38] FIG. 38 is a flowchart (2) of a laser processing method performed by the laser processing apparatus of the disclosure that includes the laser light source configured to output the pieces of laser light of respective two wavelengths.

[FIG. 39] FIG. 39 is an explanatory diagram (2) of the laser processing apparatus of the disclosure that includes the laser light source configured to output the pieces of laser light of respective two wavelengths.

**Embodiments**

In the following, some embodiments of the disclosure are described in detail with reference to the drawings. Embodiments described below each illustrate one example of the disclosure and are not intended to limit the contents of the disclosure. Also, all of the configurations and operations described in each embodiment are not necessarily essential for the configurations and operations of the disclosure. Note that the like elements are denoted with the same reference numerals, and any redundant description thereof is omitted.

Table of Contents

1. Laser Processing Apparatus

    1.1 Problems
    1.2 Configuration
    1.3 Operation
    1.4 Action
    1.5 First Description of Laser Processing brought into Practice
    1.6 Second Description of Laser Processing brought into Practice

2. Laser Processing Method
3. Laser Light Sources

    3.1 Short-Pulse $CO_2$ Laser Light Source

        3.1.1 Configuration
        3.1.2 Operation
        3.1.3 Action
        3.1.4 Et cetera

    3.2 Short-Pulse $CO_2$ Laser Light Source including Wavelength Selective Element

        3.2.1 Wavelength in Short-Pulse $CO_2$ Laser Light Source 3.2.2 Configuration
        3.2.3 Operation
        3.2.4 Action
        3.2.5 Et cetera

    3.3 Short-Pulse $CO_2$ Laser Light Source including Quantum Cascade Laser

        3.3.1 Configuration
        3.3.2 Operation
        3.3.3 Action

    3.4 First Short-Pulse $CO_2$ Laser Light Source outputting Pieces of Laser Light of respective Two Wavelengths

        3.4.1 Configuration
        3.4.2 Operation
        3.4.3 Action
        3.4.4 Et cetera

    3.5 Second Short-Pulse $CO_2$ Laser Light Source outputting Pieces of Laser Light of respective Two Wavelengths

        3.5.1 Configuration
        3.5.2 Operation
        3.5.3 Action

    3.6 Short-Pulse $CO_2$ Laser Light Source outputting Laser Light of Two Wavelengths with use of Etalon

        3.6.1 Configuration
        3.6.2 Operation
        3.6.3 Action

    3.7 Wavelength-Variable Solid-State Laser Light Source

        3.7.1 Configuration
        3.7.2 Operation
        3.7.3 Action

4. Laser Processing Apparatus including Heating Section

    4.1 Laser Processing Apparatus
    4.2 Laser Processing Method
    4.3 Third Description of Laser Processing brought into Practice

5. Laser Processing Apparatus including Wavelength-Variable Laser Light Source

    5.1 Laser Processing Apparatus
    5.2 Laser Processing Method

6. Laser Processing Apparatus including Temperature Measuring Section for Workpiece

    6.1 Laser Processing Apparatus
    6.2 Laser Processing Method

7. Laser Processing Apparatus including Laser Light Source outputting Pieces of Laser Light of respective Two Wavelengths

7.1 Laser Processing Apparatus
7.2 Laser Processing Method (1)
7.3 Laser Processing Method (2)

8. Additional Notes

## 1. Laser Processing Apparatus

### 1.1 Problems

Incidentally, there is a glass modification method that utilizes ultrashort pulsed laser as a method that allows for dividing and cutting of a curve more complicated than that in the method that utilizes the far-infrared laser of continuous oscillation as described above. This method condenses pulsed laser, whose pulse width is in tens of picoseconds or less, onto the inside of a glass substrate to form a modified layer inside the glass substrate and thus to reduce mechanical strength of an irradiated region, and applies tensile stress to divide and cut the glass substrate. A wavelength of the used laser ranges from a visible range to a near-infrared range. The modified layer formed in the glass substrate is, in general, formed based on a dotted line, but may be formed based on a continuous line. Also, the emission of the ultrashort pulsed laser allows for suppression of a thermal diffusion length around a laser irradiated region to a level of nanometer or less, thereby suppressing generation of thermal stress inside the glass and thus allowing for microfabrication such as drilling. However, there is an issue of low productivity attributed to extremely low output of the ultrashort pulsed laser as compared with regular processing laser used for processing other than glass, such as $CO_2$ laser and nanosecond pulsed laser. Further, because an influence of thermal diffusion is little in the glass processing that utilizes the ultrashort pulsed laser, a plurality of fine irregularities in the nanometer order are formed on a sidewall of a processed region, making it difficult to achieve a smooth sidewall. Formation of such fine irregularities may presumably lead to an issue such as defective embedding of an electrode in a case of forming an electronic device such as a glass interposer, and presumably lead to a decrease in mechanical strength of glass in a case of MEMS.

A description is given in greater detail of problems in a laser processing apparatus where a glass substrate is used as a workpiece.

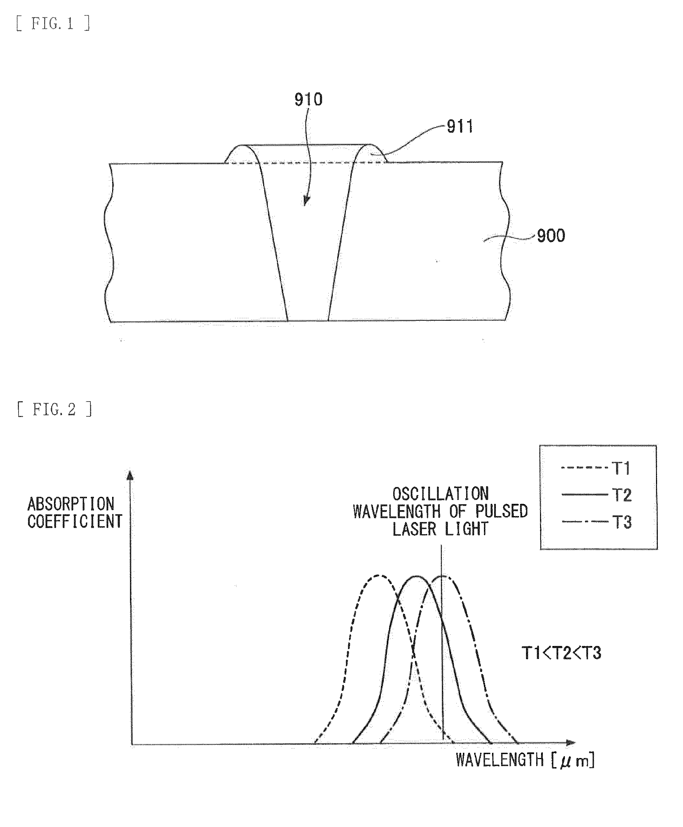

A first problem is that, in a laser processing apparatus, thermal diffusion becomes large in the glass substrate serving as the workpiece when a pulse width of pulsed laser light outputted from a laser light source is long (for example, in a few microseconds). As illustrated in FIG. 1, performing drilling of a glass substrate 900 with use of such pulsed laser light may cause a thus-formed hole 910 to be in a tapered shape, and may form an uplifted portion 911 around the hole 910 due to stress generated inside the glass substrate 900.

A second problem is that characteristics of absorption coefficient of silica glass forming the glass substrate 900 as the workpiece are varied depending on a temperature of the silica glass. Hence, upon processing of the glass substrate where a laser oscillation wavelength is constant, the absorption coefficient is varied as a result of a rise in temperature of a region of the glass substrate under processing. Such a variation in the absorption coefficient changes a light amount of pulsed laser light to be absorbed by the glass substrate, which may lead to a decrease in drilling speed of the glass substrate or deterioration in precision of the drilling.

For example, as illustrated in FIG. 2, when a peak of the absorption coefficient is shifted toward the long wavelength side upon an increase in a temperature of the silica glass in order of T1, T2, and T3 (T1<T2<T3), the absorption coefficient is low in a low temperature of a processed region of the glass substrate, whereas the absorption coefficient becomes high in a high temperature thereof. This may cause the hole 910 of the glass substrate 900 formed by the processing to be in the tapered shape, and may form the fine irregularities on the sidewall of the processed region of the hole 910.

Hence, what is desired is a highly-productive laser processing apparatus that makes it possible to perform microfabrication in any shape, such as drilling, of a workpiece that contains at least a silicon oxide (or silica) component such as a glass substrate, and suppress occurrence of damage such as the crack and the chipping as well as generation of fine irregularities on the sidewall of the processed region.

### 1.2 Configuration

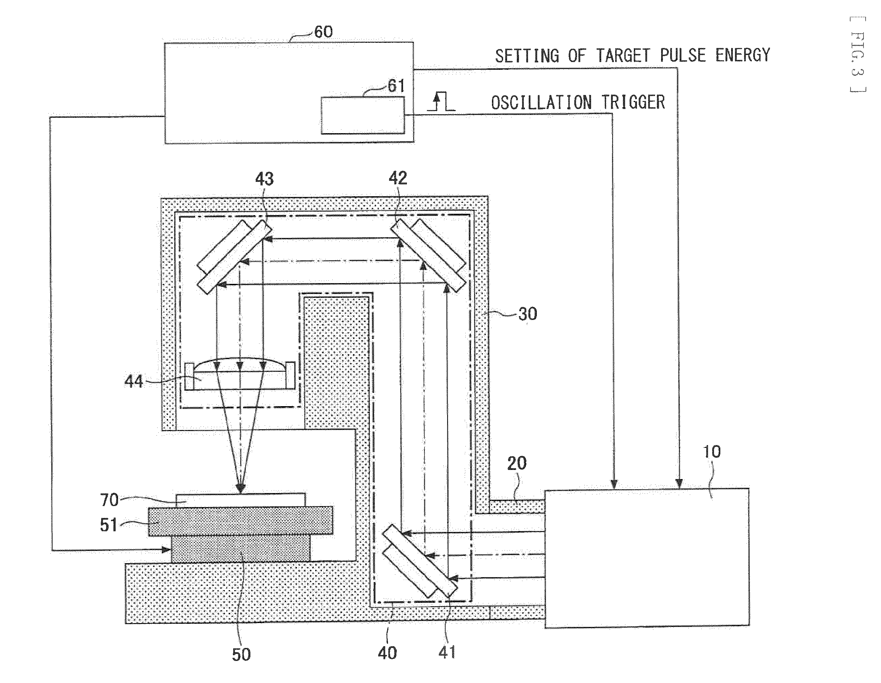

FIG. 3 illustrates a laser processing apparatus for performing drilling on glass, etc.

The laser processing apparatus of the disclosure may include a laser light source 10, an optical path pipe 20, a frame 30, an optical system 40, an XYZ stage 50, a table 51, and a controller 60. A workpiece 70 to be processed by the laser processing apparatus, such as a silica glass substrate, may be placed on the table 51.

The laser light source 10 may be a laser light source that outputs pulsed laser light. The optical system 40 may include a first highly-reflective mirror 41, a second highly-reflective mirror 42, a third highly-reflective mirror 43, and a laser condensing optical member 44 such as a lens. The optical path pipe 20 may connect the laser light source 10 and the frame 30 together. The first highly-reflective mirror 41, the second highly-reflective mirror 42, the third highly-reflective mirror 43, and the laser condensing optical member 44 included in the optical system 40 may be disposed inside the frame 30 to allow the pulsed laser light outputted from the laser light source 10 to be condensed onto the workpiece 70. Note that the first highly-reflective mirror 41, the second highly-reflective mirror 42, the third highly-reflective mirror 43, and a later-described highly-reflective mirror each may be a mirror formed through alternately stacking a high refractive index material and a low refractive index material. ZnSe, ZnS, etc., may be used for the high refractive index material, whereas $ThF_4$, $PbF_2$, etc., may be used for the low refractive index material.

The table 51 may be fixed on the XYZ stage 50. The workpiece 70 may be placed on the table 51. The silica glass substrate may be a glass substrate, etc., made of silica glass that contains $SiO_2$, for example. The controller 60 may control the laser light source 10 and the XYZ stage 50.

The laser light source 10 may be a laser light source that outputs the pulsed laser light that may involve at least one intensity peak in a wavelength range from 8 $\mu$ to 11$\mu$ and a pulse width of 30 ns or less. The controller 60 may include a pulse oscillator 61. An oscillation trigger signal derived from the pulse oscillator 61 may be inputted into the laser light source 10. Also, besides the silica glass substrate, the workpiece 70 to be processed by the laser processing apparatus of the disclosure may be a member such as a substrate that contains silicon dioxide.

Note that FIG. 3 illustrates a structure in which the pulse oscillator 61 is provided inside the controller 60. Alternatively, the pulse oscillator 61 may be located outside of the controller 60, and the pulse oscillator 61 may be controlled by the controller 60. Also, the pulse oscillator 61 may be provided inside the laser light source 10.

Further, although unillustrated in FIG. 3, optical components that control various beam shapes may be provided, examples of which may include a variable slit or a metal mask that controls a beam shape, a homogenizer that makes a beam profile uniform, and a pinhole that suppresses divergence of beams.

Further, in the foregoing description, an XYZ-θ stage may be used for the XYZ stage 50 for moving the silica glass substrate serving as the workpiece 70; however, any other alternative may be used as long as relative movement thereof is possible. For example, a scanning method with use of a galvanometer mirror, or a combination of the galvanometer mirror and the XYZ-θ stage may be used.

Further, the silica glass substrate as the workpiece 70 is disposed on an unillustrated Si (silicon) substrate provided on the table 51. Si is substantially transparent to $Co_2$ laser used for laser processing, and disposing the silica glass substrate as the workpiece 70 on the Si substrate makes it possible to suppress back-surface contamination that may occur as a result of processing of an underlying material upon formation of a through hole or a through groove on the silica glass substrate. Also, use of the Si substrate may not be necessary especially in a case where no through hole is to be formed or contamination of a back surface is not problematic. In such a case, a ceramic or a metal may be used in place of the Si substrate described above and the silica glass substrate may be fixed with use of an adhesive tape, etc.

Further, the table 51 on the XYZ stage 50 may be provided with a heating mechanism. A heating method of the heating mechanism may be a heater heating method, a lamp heating method, etc. Moreover, $Co_2$ laser light of continuous oscillation may be made incident coaxially with the pulsed laser light used for the processing. In addition, a heating method of the heating mechanism may be an oven heating method for uniformly heating the silica glass substrate, etc., that serves as the workpiece 70, as described later.

Further, the laser processing apparatus of the disclosure may be provided with an unillustrated alignment mechanism, and may perform alignment of the pulsed laser light emitted onto the workpiece with use of a substrate surface observation section and an image processing system. The substrate surface observation section may be provided for the alignment and may be provided on an optical axis different from an optical axis of the pulsed laser light.

1.3 Operation

The controller 60 may, upon placement of the workpiece 70 such as the silica glass substrate on the table 51, so control the XYZ stage 50 as to allow a focal point of the laser condensing optical member 41 to be located at a processing position of the workpiece 70 such as the silica glass substrate. The controller 60 may so control the laser light source 10 as to allow the laser light source to oscillate at predetermined pulse energy and a predetermined repetition frequency. The workpiece 70 such as the silica glass substrate may be processed through absorption of the pulsed laser light outputted from the laser light source 10.

The controller 60 may send a set value of a target pulse energy to the laser light source 10. The controller 60 may set a repetition frequency "f" in the pulse oscillator 61. The controller 60 may output, based on the set repetition frequency f, an oscillation trigger, and the outputted oscillation trigger may be inputted into the laser light source 10.

The laser light source 10 may, upon the input of the oscillation trigger into the laser light source 10, output the pulsed laser light at pulse energy close to the target pulse energy in synchronization with the oscillation trigger. The laser light outputted from the laser light source 10 may be condensed by means of the optical system 30 to irradiate the silica glass substrate as the workpiece 70.

Note that the repetition frequency f set in the pulse oscillator 61 may be equal to or greater than 25 kHz, preferably be equal to or greater than 50 kHz, and more preferably be equal to or greater than 100 kHz.

Also, the controller 60 may set the repetition frequency f and the number of pulses in the pulse oscillator 61. The controller 60 may output, based on the set repetition frequency f and the set number of pulses, the oscillation trigger, and the outputted oscillation trigger may be inputted into the laser light source 10.

In this case, the repetition frequency f set in the pulse oscillator 61 may be equal to or greater than 100 kHz (a pulse interval of 10 $\mu$s or less), and the number of pulses set therein may be two pulses or more.

1.4 Action

The laser processing apparatus of the disclosure makes it possible to irradiate the workpiece 70 such as the silica glass substrate with the pulsed laser light whose wavelength ranges from 8 $\mu$m to 11 $\mu$m and whose pulse width is 30 ns or less. Hence, thermal diffusion may be suppressed as compared with a case in which emission of pulse laser light whose pulse width is few $\mu$s is performed.

Also, allowing the repetition frequency f to be at 25 kHz or greater may raise a temperature at a laser irradiated part of the workpiece 70 such as the silica glass substrate, and increase an absorption coefficient of the laser irradiated part of the workpiece.

Further, irradiating the workpiece 70 with the pulsed laser light at the repetition frequency f of equal to or greater than 100 kHz (the pulse interval of 10 $\mu$s or less) and continuous for two pulses or more may raise the temperature of the laser irradiated part of the workpiece 70 and increase the absorption coefficient. This may suppress a formed hole from being in the tapered shape and suppress formation of the uplifting around the hole upon minute drilling of the workpiece 70 such as the glass substrate. Further, this may suppress formation of the fine irregularities on the sidewall of the processed region in the formed hole and achieve formation of a smooth processed wall.

1.5 First Description of Laser Processing brought into Practice

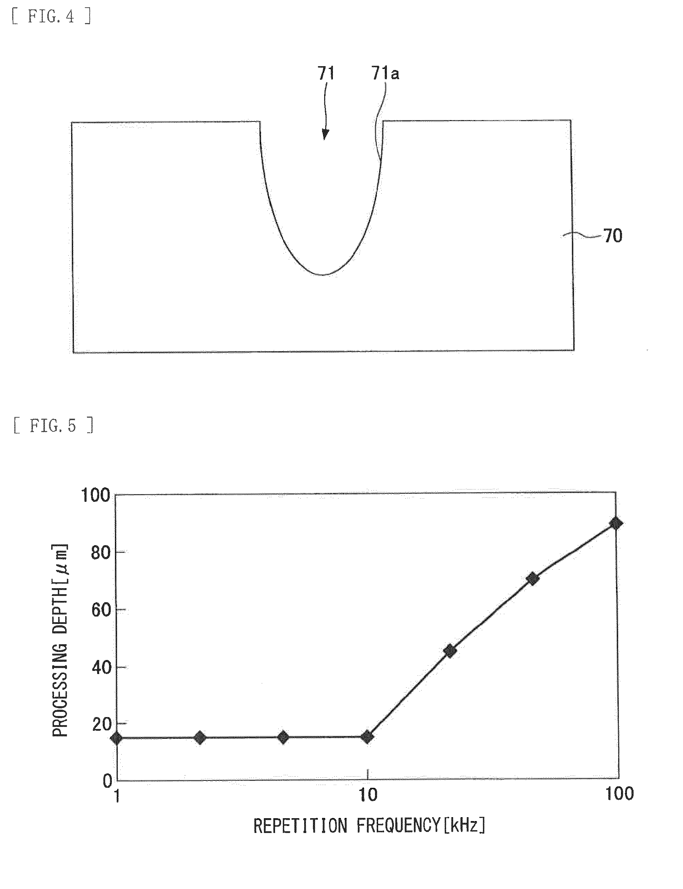

A description is given of a case in which a silica glass substrate was used as the workpiece 70 in the laser processing apparatus of the disclosure. A wavelength and a pulse width of pulsed laser light outputted from the laser light source 10 and used for processing were 10.6 $\mu$m and 10 ns, respectively. FIG. 4 illustrates a state of a cross-sectional shape of an opening 71 processed under conditions of the repetition frequency of 50 kHz, an emission energy density of 2 J/cm$^2$·pulse, and the number of times of emission of 800 shots. In the processing performed by the laser processing apparatus of the disclosure, a region on the workpiece 70 following the laser processing was formed with the opening 71, but no crack, chipping, uplifting, etc., was formed around the opening 71; further, a surface of a sidewall 71 a in the opening 71 was smooth. A distance in which heat conducts inside the silica glass as the workpiece 70 during emission of the pulsed laser light with the pulse width of 10 ns is in a range from 100 nm to 200 nm. The smooth sidewall in the opening 71 is presumably achieved as a result of melt and flow of a superficial part thereof of about 100 nm. Note that further emission of the pulsed laser light may form the opening 71 deeper and penetrating the silica glass substrate as the workpiece 70 may form a through hole on the workpiece 70.

Also, use of ultrashort pulsed laser such as picosecond laser suppresses the distance of thermal conduction during the laser light irradiation down to nm or less, which prevents the melt and the flow from being generated and makes it easier to form the fine irregularities on a processed wall. Further, use of $CO_2$ laser whose pulse width is in the microsecond order make the distance of thermal conduction long, which causes thermal expansion in a heated region of the workpiece 70 and thus makes it easier to cause crack, etc., resulting from thermal stress. Further, the pulse width in the microsecond order causes a thickness of a layer subjected to the melt and the flow to be in the micrometer order, which may result in formation of the uplifting around the opening 71.

The disclosers discovered that use of the pulsed laser light with the pulse width of 30 ns or less reduces an influence of the thermal diffusion on the inside of the silica glass substrate as the workpiece 70 and suppress the generation of crack, uplifting, etc., around the opening 71. Moreover, the pulse width of less than 10 ns made it easier to form the fine irregularities on the processed sidewall of the opening 71 due to lack of sufficient melt and flow. Based on the foregoing findings, there exists an optimal pulse width for pulsed laser light. To suppress damage such as the crack and achieve the smooth sidewall in the opening 71, it is preferable that the pulse width of the pulsed laser light be in a range from 10 ns to 30 ns, especially when the workpiece 70 is a workpiece containing silicon dioxide such as silica glass.

FIG. 5 illustrates a relationship of a repetition frequency of pulsed laser light versus a processing depth where the number of times of emission of the pulsed laser light was 800 shots. Here, an emission energy density of the pulsed laser light in the emission was 2 J/cm$^2$·pulse. As illustrated in FIG. 5, the processing depth was substantially constant without being dependent on the repetition frequency when the repetition frequency was less than 25 kHz, but the processing depth became deeper with an increase in the repetition frequency when the repetition frequency was equal to 25 kHz or greater.

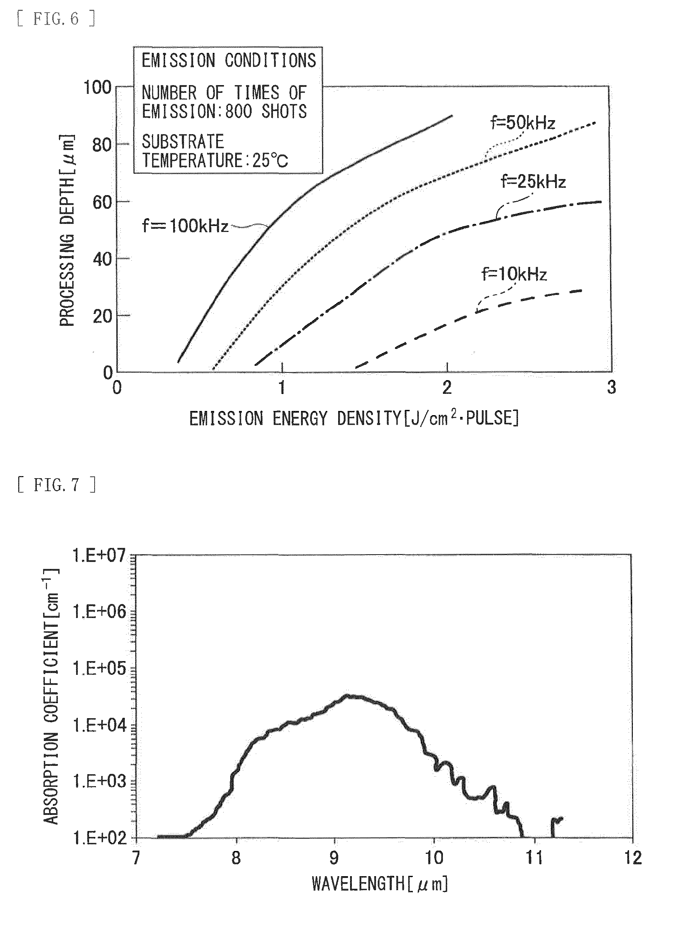

Incidentally, FIG. 6 illustrates a relationship of an emission energy density of pulsed laser light versus a processing depth where the repetition frequency f was varied at a frequency of 10 kHz, 25 kHz, 50 kHz, or 100 kHz. The processing depth became deeper in the case illustrated in FIG. 6 as well by likewise increasing the repetition frequency f.

FIG. 7 illustrates a wavelength dependency of an absorption coefficient of silica glass at room temperature. Referring to FIG. 7, an absorption coefficient $\alpha$ of silica glass is 250 cm$^{-1}$ at a wavelength of 10.6 $\mu$m at room temperature. In general, viscosity of silica glass is decreased with an increase in temperature resulting from absorption of light, shifting a peak of the absorption coefficient toward the long wavelength side as illustrated in FIG. 2. More specifically, the absorption coefficient becomes $\alpha$ = 2500 cm$^{-1}$ at a temperature of 2000 K.

Also, the disclosers discovered that an absorption coefficient at a wavelength of 10.6 $\mu$m increases up to around 35000 cm$^{-1}$ as a maximum value of an absorption peak at a temperature of around 2500 K in silica glass. Therefore, a variation in viscosity of silica glass resulting from an increase in temperature thereof brings about the increase in the absorption coefficient. The increase in processing depth with the increase in repetition frequency is presumably due to an effect of heat storage of the silica glass which makes an average temperature in a processed region easier to increase, whereby the viscosity decreases to increase the absorption coefficient and increase absorption of the pulsed laser light accordingly.

Based on FIG. 5, it was confirmed that causing the repetition frequency to be at 25 kHz or greater promotes the processing. Also, causing the repetition frequency to be at 50 kHz or greater may further promote the processing, and causing the repetition frequency to be at 100 kHz or greater may further promote the processing.

Also, the disclosers conducted an experiment in which two laser light sources each oscillate at a repetition frequency of 100 kHz were used and in which emission timing of each of the two laser light sources was adjusted to allow the repetition frequency to be at 200 kHz. As a result, it was found that, upon emission of pulsed laser light at the repetition frequency of 200 kHz, a processing speed significantly decreases due to emission of subsequent pulsed laser light before silica particles scattered by the laser processing fully scatter.

Based on the foregoing result of the experiment and findings, it is preferable that a repetition frequency be in a range from 25 kHz to 100 kHz and that a pulse width of the pulsed laser light be in a range from 10 ns to 30 ns in laser processing in which a pulsed $Co_2$ laser light source is used.

Further, similar results were obtained for alkali-free glass as well. Hence, effects similar to those described above may be achieved by virtue of the increase in absorption coefficient in continuous emission of the pulsed laser light at predetermined intervals, as long as the workpiece is made of a material containing silicon dioxide.

Moreover, hard glass is high in viscosity and an absorption coefficient shifts toward the short wavelength side. Because this results in a decrease of absorption coefficient of light at the wavelength of 10.6 $\mu$m, it is necessary to increase the emission energy density of the pulsed laser light. Incidentally, the disclosers confirmed that pulsed laser light at a wavelength of 9.4 $\mu$m is higher in processing efficiency in laser processing of the hard glass. In general, glasses containing silicon dioxide differ in viscosity, etc., depending on composition, etc., and differ in shift of a peak value of an absorption coefficient as well. Hence, appropriate selection of a wavelength of pulsed laser light used for laser processing in accordance with a composition, etc., of a material forming the workpiece 70 may achieve efficient laser processing.

Referring to FIG. 7, a peak exists in a light absorption coefficient at a wavelength ranging from 8 $\mu$m to 11 $\mu$m in a case of silica glass. Hence, selecting a wavelength of the pulsed laser light from the wavelength range ranging from 8 $\mu$m to 11 $\mu$m may achieve highly-efficient laser processing when silica glass is contained in a material forming the workpiece 70.

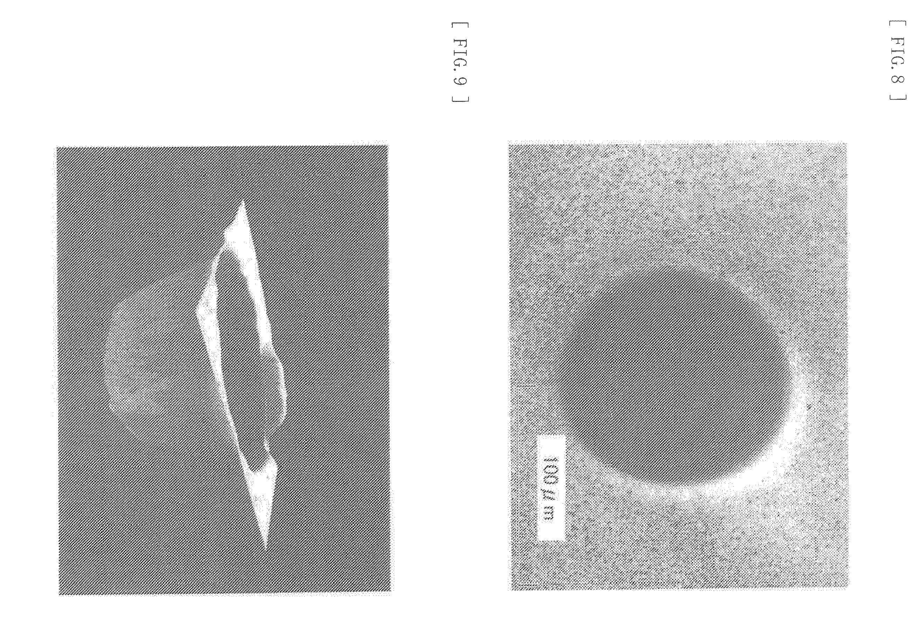

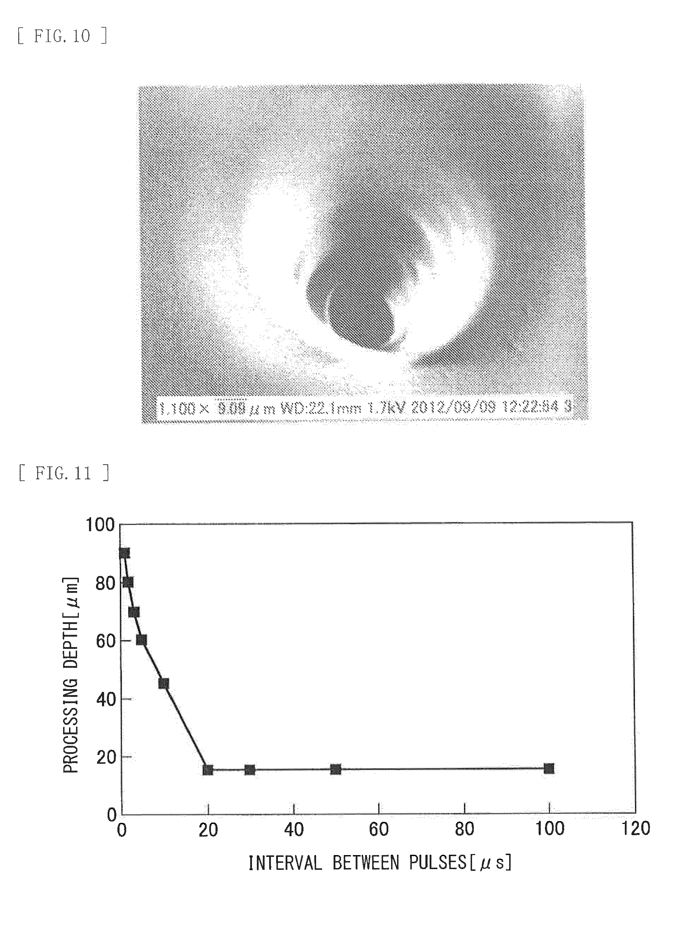

FIG. 8 illustrates an optical micrograph in which the opening was formed on the silica glass substrate as the workpiece using the laser processing apparatus as described above, whereas FIG. 9 and FIG. 10 illustrate an omni-focus composite image and an SEM (Scanning Electron Microscope) image thereof, respectively. Note that the omni-focus composite image illustrated in FIG. 9 illustrates a three-dimensional display image of an omni-focus composite image obtained by an optical microscope. The conditions of pulsed laser light in emission upon processing of a silica glass substrate as a workpiece included an emission energy density of 2 J/cm$^2$·pulse, the number of times of emission of 800 shots, and a repetition frequency of 100 kHz. As illustrated in FIGs. 8 and 9, no damage such as crack and chipping was formed around the opening formed by the laser processing, and no uplifting, etc., was confirmed around the opening as well. Also, the sidewall of the opening formed by the laser processing was extremely smooth as illustrated in FIG. 10.

1.6 Second Description of Laser Processing brought into Practice

A description is given next of a case in which a silica glass substrate was used as the workpiece 70 in the laser processing apparatus of the disclosure. In this description, described is a result of an examination on timing of pieces of laser light emitted onto the workpiece 70.

Specifically, a description is given of a result in which two laser oscillators were used and in which an interval between a pulse of a first pulsed laser light outputted from the first laser oscillator and a pulse of a second pulsed laser light outputted from the second laser oscillator was varied in a range from 1 $\mu$s to 100 $\mu$s. Note that timing of laser oscillation in each of the laser oscillators was controlled to control timing of emission of each of the first pulsed laser light and the second pulsed laser light. Also, the first pulsed laser light and the second pulsed laser light each involved a wavelength of 10.6 $\mu$m, a pulse width of 10 ns, a repetition frequency of 10 kHz, and an emission energy density of 2 J/cm$^2$·pulse.

FIG. 11 illustrates a relationship of the interval between the pulses in the respective pieces of pulsed laser light versus a processing depth of the opening where the number of times of emission was 800 shots. As illustrated in FIG. 11, the processing depth became deep and the processing was promoted at the interval between the pulses of the respective pieces of pulsed laser light of 10 $\mu$s or less. Note that the interval between the pulses of the respective pieces of pulsed laser light here is intended to refer to a minimum pulse interval between a pulse of the pulsed laser light and a pulse of the pulsed laser light.

Such a short interval between the pulses caused the second pulsed laser light to be emitted while a temperature of the silica glass substrate was increased by emission of the first pulsed laser light and before heat was diffused in a region irradiated with the first pulsed laser light. Presumably, because the emission of the second pulsed laser light was performed in a state in which the light absorption coefficient was high as described above, light absorption of the second pulsed laser light was increased and thereby the processing was promoted.

In the above description, described is a case where the first pulsed laser light and the second pulsed laser light each involved the emission energy density of 2 J/cm$^2$·pulse. However, the emission energy density of each of the first pulsed laser light and the second pulsed laser light may be varied depending on a material, etc., that forms the workpiece 70. Also, described is a case where the wavelengths of the respective first pulsed laser light and second pulsed laser light were each 10.6 $\mu$m. However, they may involve different wavelengths depending on a material, etc., that forms the workpiece. In other words, the wavelength of the first pulsed laser light may be 9.4 $\mu$m and the wavelength of the second pulsed laser light may be 10.6 $\mu$m, for example.

Based on FIG. 11, performing the emission of the pulsed laser light with two or more pulses where the interval between the pulses is 10 $\mu$s or less may increase a processing speed even under a situation where a repetition frequency is low. Also, performing the emission of the pulsed laser light with two or more pulses where the interval between the pulses is 10 $\mu$s or less as described above may reduce thermal strain occurring inside the silica glass substrate as the workpiece 70. This may allow for low-damage processing especially when the workpiece 70 is made of a material difficult to process, such as a hard glass.

2. Laser Processing Method

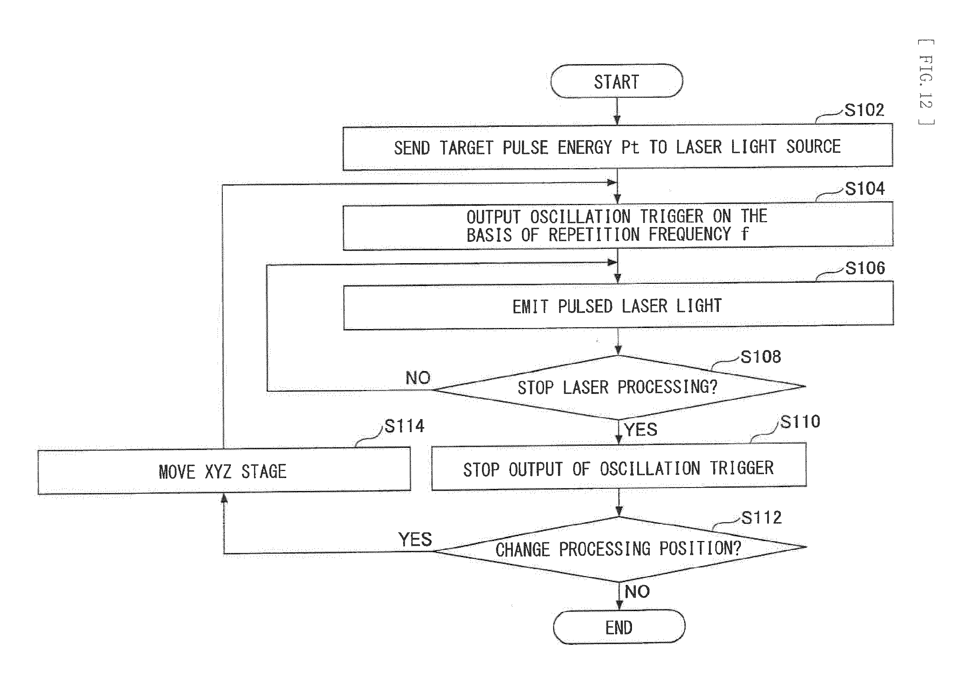

A description is given based on FIG. 12 of a laser processing method that uses the laser processing apparatus of the disclosure.

First, in Step 102 (S102), the controller 60 may send the target pulse energy Pt to the laser light source 10. The laser light source 10 may be a short-pulse CO$_2$ laser light source. For example, the laser light source 10 may output the pulsed laser light whose pulse width is 30 ns, and may be capable of varying a wavelength in a range from 9 $\mu$m to 11 $\mu$m.

Next, in Step 104 (S104), the controller 60 may output the oscillation trigger, based on the repetition frequency f set in the pulse oscillator 61.

Next, in Step 106 (S106), the pulsed laser light may be outputted from the laser light source 10, based on the oscillation trigger. The thus-outputted pulsed laser light may be condensed, following which the silica glass substrate as the workpiece 70 may be irradiated with the condensed pulsed laser light.

Next, in Step 108 (S108), the controller 60 may determine whether or not to stop the processing performed by the laser processing apparatus. More specifically, a determination may be made as to whether or not it exceeds predetermined processing time or the predetermined number of pulses is emitted to determine whether or not to stop the processing performed by the laser processing apparatus. When it exceeds the predetermined processing time or when the predetermined number of pulses is emitted, the controller 60 may make a determination to stop the processing performed by the laser processing apparatus, and make a transition to Step 110. On the other hand, when it does not exceed the predetermined processing time or when the predetermined number of pulses is not emitted, the controller 60 may make a determination to continue the processing performed by the laser processing apparatus, and make a transition to Step 106.

Next, in Step 110 (S110), the controller 60 may stop the output of the oscillation trigger signal. More specifically, because the determination as to the stopping of the processing performed by the laser processing apparatus has been made in the Step 108, the controller 60 may stop the output of the oscillation trigger signal. Thereby, the outputting of the laser light from the laser light source 10 may be stopped as well.

Next, in Step 112 (S112), the controller 60 may determine whether or not to change a processing position of the silica glass substrate as the workpiece 70. A transition may be made to Step 114 when a determination is made in the controller 60 to change the processing position of the silica glass substrate as the workpiece 70. On the other hand, the processing performed by the laser processing apparatus may be ended when a determination is made in the controller 60 not to change the processing position of the silica glass substrate as the workpiece 70.

Next, in Step 114 (S114), the controller 60 may move the XYZ stage 50 to move the processing position of the silica glass substrate as the workpiece 70, i.e., to move a position to be irradiated with the pulsed laser light of the silica glass substrate as the workpiece 70.

3. Laser Light Sources

3.1 Short-Pulse CO$_2$ Laser Light Source

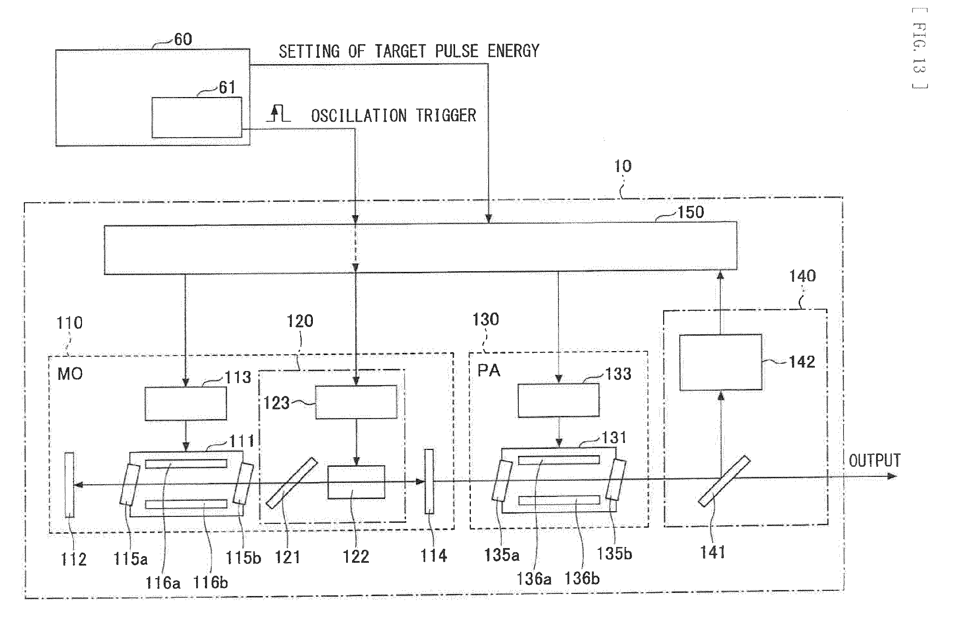

The laser light source 10 may be a short-pulse CO$_2$ laser light source. A description is given based on FIG. 13 of the short-pulse CO$_2$ laser light source.

3.1.1 Configuration

The short-pulse $CO_2$ laser light source that serves as the laser light source 10 may include an MO (master oscillator) 110, a PA (power amplifier) 130, a monitor module 140, and a laser controller 150. Note that, as used herein, the MO 110, etc., may be referred to as a master oscillator, and the PA 130, etc., may be referred to as an amplifier.

The MO 110 may include an MO chamber 111, a highly-reflective mirror 112, an MO power supply 113, a Q switch 120, and an output coupling mirror 114. Note that an optical resonator may be configured by the highly-reflective mirror 112 and the output coupling mirror 114, and the chamber 111 and the Q switch 120 may be provided in an optical path inside the optical resonator.

The MO chamber 111 may include a rear window 115a and a front window 115b which may be provided in the optical path of the optical resonator, and a pair of electrodes 116a and 116b which may be provided inside the MO chamber 111. The rear window 115a and the front window 115b each may be made of ZnSe. The inside of the MO chamber 111 may be filled with laser gas containing $CO_2$ gas.

The MO power supply 113 may be an RF (radio frequency) power supply, and may be so connected to the pair of electrodes 116a and 116b as to apply a potential to the pair of electrodes 116a and 116b. The highly-reflective mirror 112 may be coated with a reflective film that may reflect the light at the wavelength of 10.6 $\mu$m at high reflectivity. The output coupling mirror 114 may include a ZnSe substrate coated with a partially reflective film that may allow part of the light at the wavelength of 10.6 $\mu$m to be transmitted therethrough and allow part thereof to be reflected therefrom.

The Q switch 120 may include a polarizer 121, an EO Pockels cell 122, and an EO power supply 123. The EO Pockels cell 122 may be controlled by a voltage applied by the EO power supply 123.

The PA 130 may include a PA chamber 131 and a PA power supply 133, and may be disposed in an optical path of laser light outputted from the MO 110. The PA chamber 131 may include an entrance window 135a and an exit window 135b, and a pair of electrodes 136a and 136b which may be provided inside the PA chamber 131. The entrance window 135a and the exit window 135b each may be made of ZnSe or diamond. The inside of the PA chamber 131 may be filled with laser gas containing $CO_2$ gas.

The PA power supply 133 may be an RF power supply, and may be so connected to the pair of electrodes 136a and 136b as to apply a potential to the pair of electrodes 136a and 136b.

The monitor module 140 may include a beam splitter 141 and an energy sensor 142.

3.1.2 Operation

The laser controller 150 may receive the target pulse energy from the controller 61. The laser controller 150 may apply, by the MO power supply 113, the potential between the pair of electrodes 116a and 116b of the MO chamber 111 to cause RF discharge to be performed, and thereby the laser gas may be excited. Also, the laser controller 150 may apply, by the PA power supply 133, the potential between the pair of electrodes 136a and 136b of the PA chamber 133 to cause RF discharge to be performed, and thereby the laser gas may be excited.

The laser controller 150 may send a signal to the Q switch 120 of the MO 110 in synchronization with the oscillation trigger derived from the pulse oscillator 61 in the controller 60. In the MO 110, amplification of 10.6 $\mu$m (line 10P (20)) may be performed by the optical resonator configured by the highly-reflective mirror 112 and the output coupling mirror 114, and thereby the laser oscillation may be performed. At this time, the pulsed laser light with the pulse width of 30 ns or less and the wavelength of about 10.6 $\mu$m may be outputted by the Q switch 120.

The pulsed laser light outputted from the PA 130 may be partially branched by the beam splitter 141. A pulse energy of the thus-partially-branched pulsed laser light may be measured by the energy sensor 142 of the monitor module 140. A signal on a value of the pulse energy thus-measured by the energy sensor 142 of the monitor module 140 may be sent to the laser controller 150.

The laser controller 150 may perform a feedback control of an excitation intensity through the MO power supply 113 and the PA power supply 130, based on the pulse energy measured by the energy sensor 142.

3.1.3 Action

In the MO 110, the highly-reflective mirror 112 configuring the optical resonator may be formed with the reflective film that reflects the light at the wavelength of 10.6 $\mu$m, and the output coupling mirror 114 configuring the optical resonator may be formed with the partially reflective film that partially reflects the light at the wavelength of 10.6 $\mu$m. The inside of the MO chamber 111 may be filled with a gain medium containing the $CO_2$ laser gas. Synchronizing the Q switch 120 in the MO 110 with the oscillation trigger signal may output the pulsed laser light that involves the wavelength of 10.6 $\mu$m and the pulse width of 30 ns or less.

3.1.4 Et cetera

In the above description, described is an MOPA scheme in which the number of PAs is one. Further, however, a plurality of PAs may be disposed in the optical path of the pulsed laser light outputted from the MO. This may further increase energy of the pulsed laser light.

Also, in the above description, described is a chamber (for example, a triaxial orthogonal chamber or a slab chamber) in which the pairs of electrodes are disposed in the respective MO chamber and PA chamber. However, a high-speed axial chamber may be employed in which a pair of electrodes or a high-frequency coil is disposed outside of each of the MO chamber and the PA chamber.

Also, a configuration may be employed in which the laser light source 10 includes only the MO and includes no PA 130 when a pulse energy of the laser light outputted from the laser light source 10 is allowed to be small.

Also, in the above description, described is a case in which the pulsed laser light at the wavelength of 10.6 $\mu$m is outputted. However, a wavelength at which reflectivity of the highly-reflective mirror 112 in the MO 110 reaches a peak and a wavelength at which reflectivity of the film 114 of the output coupling mirror in the MO 110 reaches a peak each may be 9.3 $\mu$m, 9.6 $\mu$m, or 10.2 $\mu$m, for example. In this case, the wavelength of the outputted laser light may be 9.3 $\mu$m, 9.6 $\mu$m, or 10.2 $\mu$m. Further, the highly-reflective mirror 112 may be coated with a film that may allow for high reflection with respect to all of the wavelengths of 9.3 $\mu$m, 9.6 $\mu$m, and 10.2 $\mu$m, and the film 114 of the output coupling mirror may be coated with a film that may allow for partial reflection with respect to the wavelengths of 9.3 $\mu$m, 9.6 $\mu$m, and 10.2 $\mu$m.

### 3.2 Short-Pulse $CO_2$ Laser Light Source including Wavelength Selective Element

#### 3.2.1 Wavelength in Short-Pulse $CO_2$ Laser Light Source

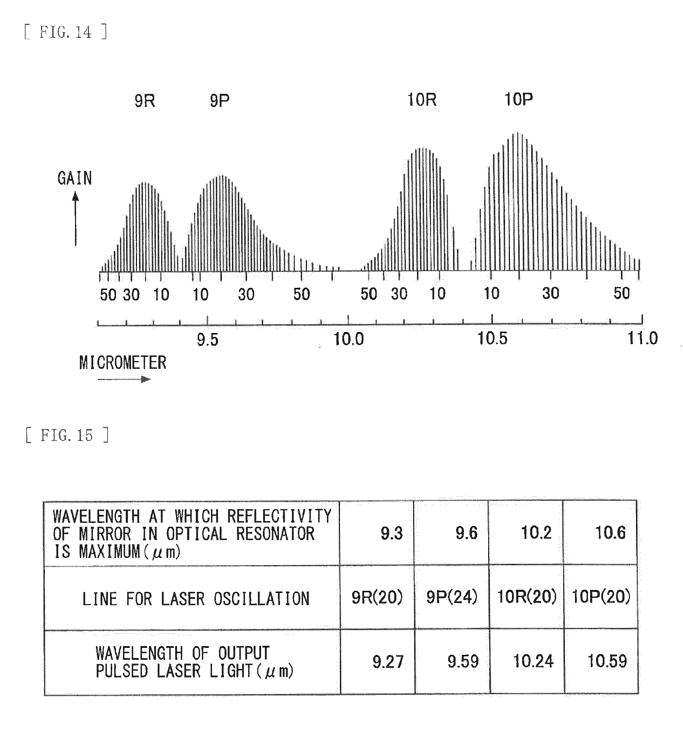

Next, a description is given of a wavelength of the short-pulse $CO_2$ laser light source. FIG. 14 illustrates a relationship of amplification lines of a $CO_2$ laser medium in the short-pulse $CO_2$ laser light source versus a gain. Referring to FIG. 14, a plurality of amplification lines exist in the $CO_2$ laser medium in a wavelength range from 9.2 $\mu$m to 10.9 $\mu$m. An oscillation wavelength of the short-pulse $CO_2$ laser light source may be determined by wavelength selectivity of a resonator and the amplification lines.

For example, the laser light source may be a light source that makes it possible to output laser light of a desired wavelength from a laser light source, with use of a mirror, in an optical resonator, that allows light of the desired wavelength to be reflected. More specifically, varying a wavelength at which reflectivity of the mirror in the optical resonator becomes the maximum may cause a wavelength of laser light outputted from the laser light source to be, for example, 9.27 $\mu$m, 9.59 $\mu$m, 10.24 $\mu$m, or 10.59 $\mu$m, as illustrated in FIG. 15. Also, even when the reflectivity of the mirror in the optical resonator is broad with respect to the wavelength (reflects pieces of light at respective wavelengths corresponding to the plurality of amplification lines), laser oscillation may be so performed as to be concentrated on a line largest in gain.

Such a selection of the wavelength derived from the laser light source may be performed with use of a wavelength selective element.

#### 3.2.2 Configuration

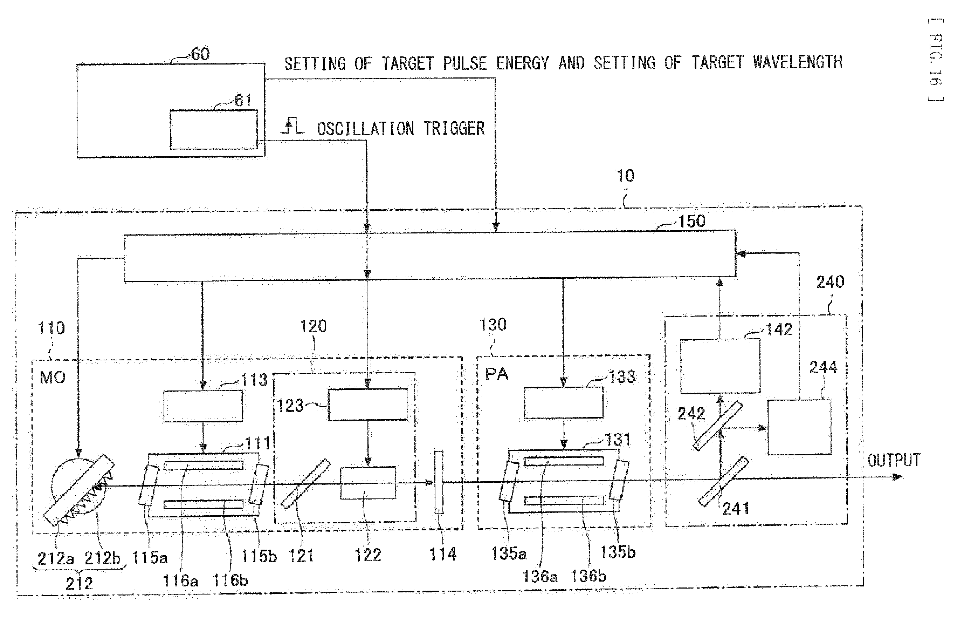

A description is given based on FIG. 16 of the short-pulse $CO_2$ laser light source that includes the wavelength selective element. The short-pulse $CO_2$ laser light source including the wavelength selective element, illustrated in FIG. 16, may be provided with a wavelength selective element 212 in place of the highly-reflective mirror 112 in the short-pulse $CO_2$ laser light source illustrated in FIG. 13.

The wavelength selective element 212 may have a configuration in which a grating 212a is provided on a rotary stage 212b. The rotary stage 212b may be rotated to vary an angle of incidence of light incident on the grating 212a and to increase reflectivity of a desired wavelength. The grating 212a may take a Littrow arrangement in which the angle of incidence and an angle of diffraction become the same.

Also, the monitor module 240 may include a first beam splitter 241, a second beam splitter 242, the energy sensor 142, and a wavelength sensor 244. The wavelength sensor 244 may be a spectrometer including a grating or a spectrometer including an etalon.

Note that contents other than those described above may be similar to those of the short-pulse $CO_2$ laser light source illustrated in FIG. 13.

#### 3.2.3 Operation

The laser controller 150 may receive a target wavelength and a target pulse energy from the controller 60. The laser controller 150 may send signals on RF discharge corresponding to the target pulse energy to the MO power supply 113 and the PA power supply 133. The laser controller 150 may so control the wavelength selective element 212 of the MO 110 as to allow light of the target wavelength to be selected. The laser controller 150 may send signals to the MO power supply 113, the PA power supply 133, and the Q switch 122 in the MO 110, in synchronization with the oscillation trigger derived from the pulse oscillator 61 in the controller 60.

The pulsed laser light to be outputted from the MO 110 may be derived from the laser oscillation based on the line highest in gain among a wavelength spectrum range selected by the grating 212a. The pulsed laser light outputted from the MO 110 may be amplified by the PA 130.

The first beam splitter 241 of the monitor module 240 may allow part of light having entered the first beam splitter 241 to be reflected therefrom and allow the remaining part of the light to be transmitted therethrough. The light transmitted through the first beam splitter 241 may enter a laser processing machine.

The light reflected by the first beam splitter 241 may be branched by the second beam splitter 242 into light to be transmitted through the second beam splitter 242 and light to be reflected from the second beam splitter 242. The light transmitted through the second beam splitter 242 may enter the energy sensor 142, and the light reflected from the second beam splitter 242 may enter the wavelength sensor 244.

The energy sensor 142 and the wavelength sensor 244 may measure the pulse energy and the wavelength of the thus-outputted pulsed laser light, and signals obtained by the measurement may be sent to the laser controller 150.

The laser controller 150 may rotate, based on the wavelength measured by the wavelength sensor 244, the rotary stage 212b of the wavelength selective element 212 to control the wavelength to be selected by the grating 212a. Also, the laser controller 150 may control, by the MO power supply 113 and the PA power supply 133, a duty of each of voltages applied to the pair of electrodes 116a and 116b and the pair of electrodes 136a and 136b, or a duty of time of each RF discharge thereof, based on the pulse energy measured by the energy sensor 142. A feedback control of the pulse energy may be thereby performed by the laser controller 150.

### 3.2.4 Action

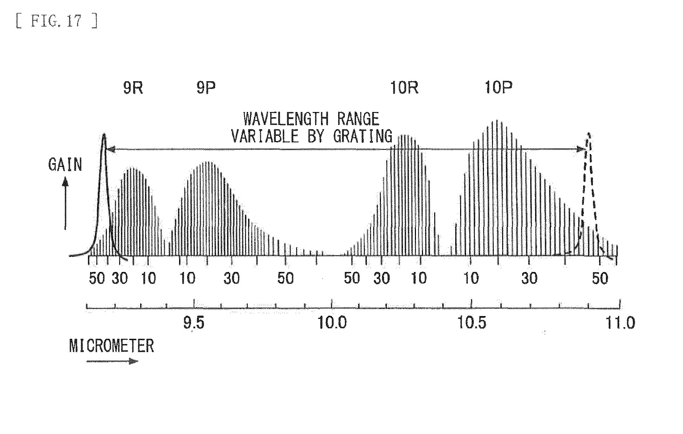

In the short-pulse $CO_2$ laser light source of the disclosure, the grating 212a may be used as the wavelength selective element 212 to vary the angle of incidence of light incident on the grating 212a. This may vary the oscillation wavelength in a wavelength range from 9 $\mu$m to 11 $\mu$m as illustrated in FIG. 17.

### 3.2.5 Et cetera

In the above description, described is a case in which the grating that takes the Littrow arrangement is used. However, a mirror and a grating may be used that take an arrangement that allows for an oblique incidence. An etalon unillustrated in FIG. 16 may be arranged in the optical resonator.

In a case where the etalon is used, an air gap etalon whose FSR (free spectral range) is 2 $\mu$m (variable range of wavelength 11 - 9 = 2 $\mu$m) or greater may be preferable. Also, an angle of incidence of light to be incident on the etalon may be varied to vary the wavelength to be selected.

Such an etalon may satisfy the following expression (1) where, for example, the wavelength of the laser light may be assumed as 9.95 $\mu$m and a refractive index n of nitrogen gas may be assumed as 1.000.

$$FSR=\lambda^2/(2nd)=2\ \mu m \qquad (1)$$

Based on the above expression (1), a mirror interval of the etalon may be defined as d = 24.7 $\mu$m. The etalon may include a configuration in which surfaces of respective ZnSe substrates are each coated with a partially reflective film (reflectivity in a range from 70% to 90%) and are bonded together with a spacer interposed in between.

### 3.3 Short-Pulse $CO_2$ Laser Light Source including Quantum Cascade Laser

### 3.3.1 Configuration

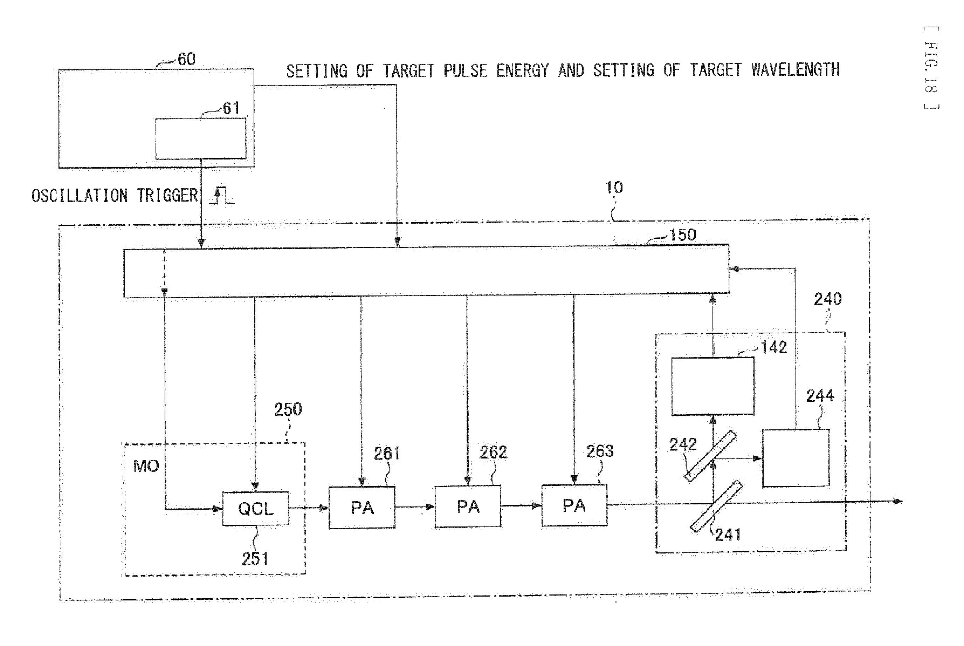

A description is given based on FIG. 18 of a short-pulse $CO_2$ laser light source that includes a quantum cascade laser. The short-pulse $CO_2$ laser light source including the quantum cascade laser, illustrated in FIG. 18, may use an MO 250 that includes a quantum cascade laser (QCL) 251 in place of the MO in the short-pulse $CO_2$ laser light source illustrated in FIG. 13. The quantum cascade laser 251 may be a laser that includes a semiconductor and a grating, and oscillates at a single longitudinal mode. Also, the quantum cascade laser 251 may include an actuator that varies a wavelength selected by the grating and a power supply that causes a pulse current to flow to the semiconductor. The quantum cascade laser 251 may be made of a compound semiconductor material such as InP and GaAs.

Also, a plurality of PAs may be disposed in an optical path of the laser light outputted from the MO 250. For example, a configuration may be employed in which a first PA 261, a second PA 262, and a third PA 263 are disposed in order in the optical path of the laser light outputted from the MO 250 in a case illustrated in FIG. 18. Here, the first PA 261 may be a regenerative amplifier.

The monitor module 240 may include the first beam splitter 241, the second beam splitter 242, the energy sensor 142, and the wavelength sensor 244. The wavelength sensor 244 may be the spectrometer including the grating or the spectrometer including the etalon.

Note that contents other than those described above may be similar to those of the short-pulse $CO_2$ laser light source illustrated in FIG. 13.

### 3.3.2 Operation

The laser controller 150 may receive the target wavelength and the target pulse energy from the controller 60. The laser controller 150 may send signals on RF, to be used to perform excitation corresponding to the target pulse energy, to the power supplies of the respective first PA 261, second PA 262, and third PA 263.

The laser controller 150 may so control an unillustrated wavelength selective element in the quantum cascade laser 251 as to allow light of the target wavelength to be selected. The laser controller 150 may input a signal into an unillustrated pulse current power supply in the quantum cascade laser 251, in synchronization with the oscillation trigger derived from the pulse oscillator 61 in the controller 60.

The pulsed laser light outputted from the quantum cascade laser 251 may be derived from a laser that performs laser oscillation based on the wavelength selected by the unillustrated wavelength selective element in the quantum cascade laser 251.

Hence, the pulsed laser light, whose pulse width is 30 ns and wavelength is based on any amplification line at a wavelength (ranging from 8 $\mu$m to 11 $\mu$m), may be outputted from the quantum cascade laser 251 as the laser.

The pulsed laser light thus outputted from the quantum cascade laser 251 may be amplified by the plurality of PAs, i.e., the first PA 261, the second PA 262, and the third PA 263, as the amplifiers in which amplification is performed based on amplification lines substantially coincident with the amplification lines of the $CO_2$ laser medium.

Part of the laser light thus amplified and thus outputted from the third PA 263 may be reflected by the first beam splitter 241 of the monitor module 240. Further, part of the laser light reflected by the first beam splitter 241 may be branched by the second beam splitter 242 into light to be transmitted through the second beam splitter 242 and light to be reflected from the second beam splitter 242. The light transmitted through the second beam splitter 242 may enter the energy sensor 142, and the light reflected from the second beam splitter 242 may enter the wavelength sensor 244. The laser controller 150 may control, based on the wavelength of the pulsed laser light measured by the wavelength sensor 244, the oscillation wavelength of the quantum cascade laser 251 to meet the target wavelength.

### 3.3.3 Action

The oscillation wavelength of the quantum cascade laser 251 may be controlled in the wavelength range from 9 $\mu$m to 11 $\mu$m to control the wavelength of the pulsed laser light outputted from the laser light source.

### 3.4 First Short-Pulse $CO_2$ Laser Light Source outputting Pieces of Laser Light of respective Two Wavelengths

### 3.4.1 Configuration

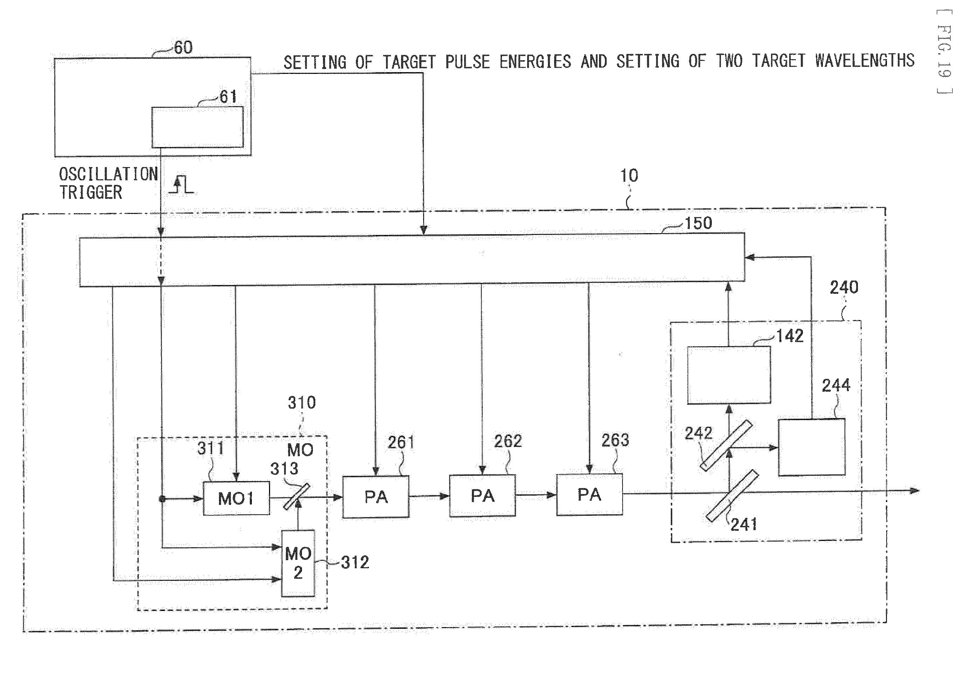

A description is given based on FIG. 19 of a first short-pulse $CO_2$ laser light source that outputs pieces of laser light of respective two wavelengths. The first short-pulse $CO_2$ laser light source that outputs the pieces of laser light of respective two wavelengths, illustrated in FIG. 19, may include an MO section 310 that includes a first MO 311, a second MO 312, and a third beam splitter 313.

The first MO 311 and the second MO 312 may be oscillators that may oscillate at respective wavelengths different from each other. The first MO 311 and the second MO 312 may each be a quantum cascade laser that includes an unillustrated grating.

The third beam splitter 313 may function as a half mirror (50% for transmission and 50% for reflection) with respect to wavelengths derived from the respective first MO 311 and second MO 312. The third beam splitter 313 may be disposed in an optical path of the pulsed laser light outputted from the first MO 311, and may be disposed in an optical path of the pulsed laser light outputted from the second MO 312.

The third beam splitter 313 may be so provided as to allow the center of an optical path axis of the pulsed laser light, outputted from the first MO 311 and transmitted through the third beam splitter 313, to be brought into coincidence with the center of an optical path axis of the pulsed laser light outputted from the second MO 312 and reflected from the third beam splitter 313.

Also, a plurality of PAs may be disposed in an optical path of the laser light outputted from the MO section 310. For example, a configuration may be employed in which the first PA 261, the second PA 262, and the third PA 263 are disposed in order in the optical path of the laser light outputted from the MO section 310 in a case illustrated in FIG. 19.

The monitor module 240 may include the first beam splitter 241, the second beam splitter 242, the energy sensor 142, and the wavelength sensor 244. The wavelength sensor 244 may be the spectrometer including the grating or the spectrometer including the etalon.

Note that contents other than those described above may be similar to those of the short-pulse $CO_2$ laser light source illustrated in FIG. 13.

### 3.4.2 Operation

The laser controller 150 may receive two target wavelengths ($\lambda$1t and $\lambda$2t) and two target pulse energies (P1t and P2t) from the controller 60. The laser controller 150 may send signals on current values to the respective first MO 311 and second MO 312, and send signals on RF, to be used to perform excitation corresponding to the target pulse energies, to the power supplies of the respective first PA 261, second PA 262, and third PA 263.

The laser controller 150 may so control unillustrated wavelength selective elements in the respective first MO 311 and second MO 312 as to allow their respective pieces of light of the target wavelengths to be selected, in a case where the first MO 311 and the second MO 312 are each the quantum cascade laser. The laser controller 150 may input signals into respective unillustrated pulse current power supplies of the quantum cascade lasers of the respective first MO 311 and second MO 312 together, in synchronization with the oscillation trigger derived from the pulse oscillator 61 in the controller 60.

The first MO 311 and the second MO 312 may be MOs that oscillate at the respective wavelengths selected by their respective wavelength selective elements provided therein. The pieces of pulsed laser light thus outputted from the respective first MO 311 and second MO 312 may be amplified by the plurality of PAs, i.e., the first PA 261, the second PA 262, and the third PA 263, as the amplifiers in which amplification is performed based on each of two wavelengths each of which is substantially coincident with the amplification lines of the $CO_2$ laser medium.

Part of each pulsed laser light, thus amplified by the first PA 261, the second PA 262, and the third PA 263 and thus outputted from the third PA 263, may be reflected by the first beam splitter 241 of the monitor module 240. Further, part of each laser light reflected by the first beam splitter 241 may be branched by the second beam splitter 242 into light to be transmitted through the second beam splitter 242 and light to be reflected from the second beam splitter 242. Each light transmitted through the second beam splitter 242 may enter the energy sensor 142, and each light reflected from the second beam splitter 242 may enter the wavelength sensor 244. The laser controller 150 may control, based on the wavelengths of the respective pieces of pulsed laser light measured by the wavelength sensor 244, the oscillation wavelengths of the respective first MO 311 and second MO 312 to meet the respective two target wavelengths.

More specifically, because the wavelength sensor 244 may measure a relationship between a wavelength of the laser light and a light intensity, the wavelength sensor 244 may measure the respective light intensities of the pieces of laser light of the respective two different wavelengths. Thereby, respective intensity peaks (S1 and S2) of the pieces of laser light of the respective two different wavelengths may be obtained by the wavelength sensor 244.

The energy sensor 142 may measure sum Psum of the respective pulse energies of the pieces of pulsed laser light of the respective two different wavelengths. Hence, the pulse energies P1 and P2 for the respective measured wavelengths ($\lambda$1 and $\lambda$2) may be determined based on the following expressions (2) and (3).

$$P1 = Psum \times S1/(S1+S2) \qquad (2)$$

$$P2 = Psum \times S2/(S1+S2) \qquad (3)$$

The laser controller 150 may so perform a control as to allow the target pulse energies P1t and P2t for the respective wavelengths to be obtained, based on the determined pulse energies P1 and P2 for the respective measured wavelengths ($\lambda$1 and $\lambda$2). More specifically, the laser controller 150 may perform a feedback control of an excitation intensity on the first MO 311, the second MO 312, the first PA 261, the second PA 262, and the third PA 263, based on the pulse energies P1 and P2.

### 3.4.3 Action

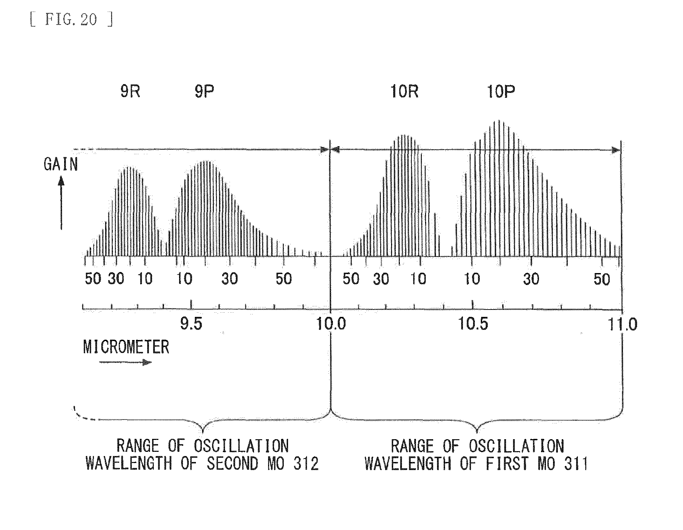

Referring to FIG. 20, the laser light source may control the oscillation wavelength of the first MO 311 in a wavelength range from 9 $\mu$m to 10 $\mu$m and control the oscillation wavelength of the second MO 312 in a wavelength range from 10 $\mu$m to 11 $\mu$m to control the pieces of pulsed laser light of the respective two wavelengths outputted from the laser light source.

The respective optical path axes in the optical paths of the respective pieces of pulsed laser light outputted from the respective first MO 311 and second MO 312 may be brought into coincidence with each other by the third beam splitter 313 to perform the amplification by the same first PA 261, second PA 262, and third PA 263.

When the workpiece includes glass, a wavelength at which the absorption coefficient is maximum may be in a range from 9 $\mu$m to 10 $\mu$m at a temperature in the initial stage of processing, and may be in a range from 10 $\mu$m to 11 $\mu$m upon a temperature increased by the processing. In this case, irradiation of the workpiece that includes the glass with the respective pieces of pulsed laser light of the two different wavelength in the respective wavelength ranges from 9 $\mu$m to 10 $\mu$m and from 10 $\mu$m to 11 $\mu$m increases absorption of the pulsed laser light in the workpiece. Hence, this may make it possible to shorten processing time, etc.

### 3.4.4 Et cetera

The number of MOs included in the MO section 310 is not limited to two, and may be three or more. Also, these MOs may be MOs whose respective oscillation wavelengths and pulse energies are independently controlled. The MOs included in the MO section 310 each may include, besides the quantum cascade laser, a chamber filled with the $CO_2$ laser medium as illustrated in FIG. 13.

### 3.5 Second Short-Pulse $CO_2$ Laser Light Source outputting Pieces of Laser Light of respective Two Wavelengths

#### 3.5.1 Configuration

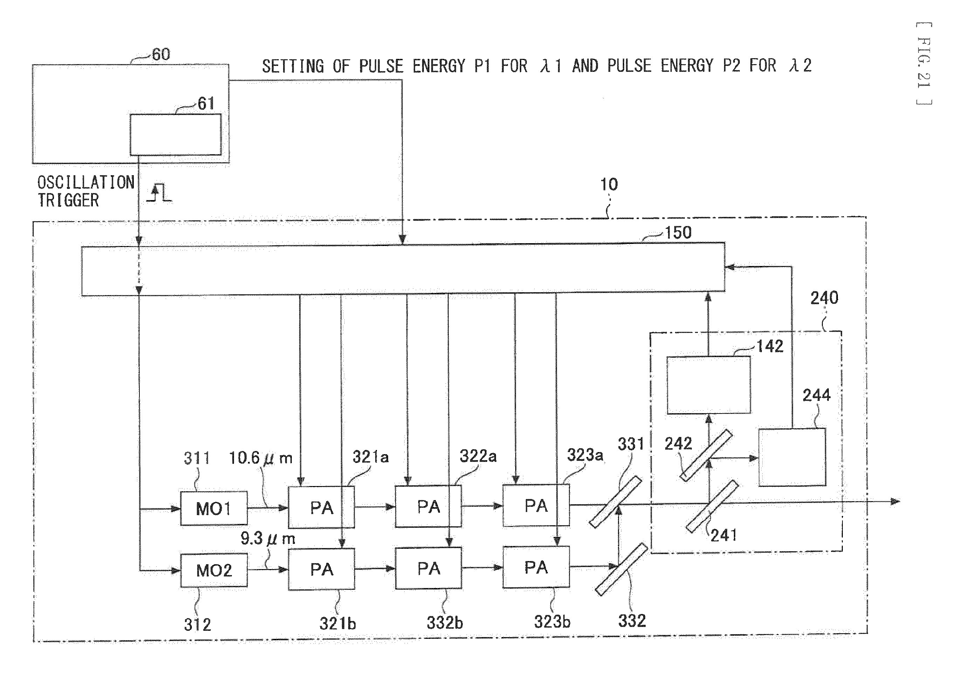

A description is given based on FIG. 21 of a second short-pulse $CO_2$ laser light source that outputs pieces of laser light of respective two wavelengths. The second short-pulse $CO_2$ laser light source that outputs the pieces of laser light of respective two wavelengths, illustrated in FIG. 21, may include the first MO 311 and the second MO 312. The first MO 311 may output pulsed laser light at a wavelength of 10.6 $\mu$m, and the second MO 312 may output pulsed laser light at a wavelength of 9.3 $\mu$m. Also, a first PA 321 a, a second PA 322a, and a third PA 323a may be provided in an optical path of the pulsed laser light outputted from the first MO 311, and a first PA 321 b, a second PA 322b, and a third PA 323b may be provided in an optical path of the pulsed laser light outputted from the second MO 312.

The side on which the pulsed laser light is outputted of the third PA 323a may be provided with a dichroic mirror 331. The dichroic mirror 331 may include a diamond substrate coated with a film that may allow the light at the wavelength of 10.6 $\mu$m to be transmitted therethrough at high transmittance and allow the light at the wavelength of 9.3 $\mu$m to be reflected therefrom at high reflectivity.

The side on which the pulsed laser light is outputted of the third PA 323b may be provided with a highly-reflective mirror 332 that may reflect the light at the wavelength of 9.3 $\mu$m at high reflectivity. The highly-reflective mirror 332 and the dichroic mirror 331 may be so disposed as to allow the center of an optical path axis of the pulsed laser light outputted from the third PA 323a to be brought into coincidence with the center of an optical path axis of the pulsed laser light outputted from the third PA 323b.

The monitor module 240 may include the first beam splitter 241, the second beam splitter 242, the energy sensor 142, and the wavelength sensor 244. The wavelength sensor 244 may be the spectrometer including the grating or the spectrometer including the etalon.

Note that contents other than those described above may be similar to those of the short-pulse $CO_2$ laser light source illustrated in FIG. 13.

3.5.2 Operation

The laser controller 150 may receive the target pulse energies (P1t and P2t) for the respective wavelengths $\lambda$1 and $\lambda$2 from the controller 60. The laser controller 150 may receive the oscillation trigger sent from the controller 60.

The first MO 311 may output the pulsed laser light at the wavelength of 10.6 $\mu$m, and the second MO 312 may output the pulsed laser light at the wavelength of 9.3 $\mu$m.

The pulsed laser light outputted from the first MO 311 may be amplified by the first PA 321 a, the second PA 322a, and the third PA 323a. Also, the pulsed laser light outputted from the second MO 312 may be amplified by the first PA 321 b, the second PA 322b, and the third PA 323b.

The laser light outputted from the third PA 323b may be reflected by the highly-reflective mirror 332 to be incident on the dichroic mirror 331, and the thus-incident laser light may be reflected by the dichroic mirror 331. The laser light outputted from the third PA 323a may be transmitted through the dichroic mirror 331. An optical path axis of the pulsed laser light at the wavelength of 10.6 $\mu$m transmitted through the dichroic mirror 331 may be the same as an optical path axis of the pulsed laser light at the wavelength of 9.3 $\mu$m reflected from the dichroic mirror 332.

The pulsed laser light at the wavelength of 10.6 $\mu$m transmitted through the dichroic mirror 331 and the pulsed laser light at the wavelength of 9.3 $\mu$m reflected from the dichroic mirror 331 may enter the monitor module 240. In the monitor module 240, part of the pulsed laser light at the wavelength of 10.6 $\mu$m transmitted through the dichroic mirror 331 and part of the pulsed laser light at the wavelength of 9.3 $\mu$m reflected from the dichroic mirror 331 may be reflected by the first beam splitter 241. Further, the respective parts of the pieces of pulsed laser light reflected by the first beam splitter 241 each may be branched by the second beam splitter 242 into light to be transmitted through the second beam splitter 242 and light to be reflected from the second beam splitter 242. Each light transmitted through the second beam splitter 242 may enter the energy sensor 142, and each light reflected from the second beam splitter 242 may enter the wavelength sensor 244. The laser controller 150 may control, based on the wavelengths of the respective pieces of pulsed laser light measured by the wavelength sensor 244, the oscillation wavelengths of the respective first MO 311 and second MO 312 to meet the respective two target wavelengths.

More specifically, because the wavelength sensor 244 may measure a relationship between a wavelength of the laser light and a light intensity, the wavelength sensor 244 may measure the respective light intensities of the pieces of laser light of the respective two different wavelengths. Thereby, the respective intensity peaks (S1 and S2) of the pieces of laser light of the respective two different wavelengths may be obtained by the wavelength sensor 244.

The energy sensor 142 may measure the sum Psum of the respective pulse energies of the pieces of pulsed laser light of the respective two different wavelengths. The pulse energies P1 and P2 for the respective wavelengths ($\lambda$1 and $\lambda$2) measured by the energy sensor 142 may be determined based on the following expressions (2) and (3).

$$P1 = Psum \times S1/(S1+S2) \qquad (2)$$

$$P2 = Psum \times S2/(S1+S2) \qquad (3)$$

The laser controller 150 may so perform a control as to allow the target pulse energies P1t and P2t for the respective wavelengths to be obtained, based on the determined pulse energies P1 and P2 for the respective measured wavelengths ($\lambda$1 and $\lambda$2). More specifically, the laser controller 150 may perform a feedback control of an excitation intensity on the first MO 311, the first PA 321 a, the second PA 322a, and the third PA 323a, based on the pulse energy P1. Also, the laser controller 150 may perform a feedback control of an excitation intensity on the second MO 312, the first PA 321 a, the second PA 322a, and the third PA 323a, based on the pulse energy P2.

3.5.3 Action

As illustrated in FIG. 21, the dichroic mirror 331 may cause the pieces of pulsed laser light of the respective two different wavelengths (9.3 $\mu$m and 10.6 $\mu$m) outputted from the laser light source to be outputted in the same optical path axis. Also, the laser controller 150 may so perform a control as to allow the target pulse energies for the respective wavelengths $\lambda 1$ and $\lambda 2$ to meet the respective target energies P1t and P2t. The inside of an MO chamber of each of the first MO 311 and the second MO 312 may be filled with a $CO_2$ gain medium as with the MO illustrated in FIG. 13. In this case, an optical resonator length or a wavelength corresponding to a peak of a reflectivity of the highly-reflective mirror, etc., may be varied therebetween to obtain different wavelengths (for example, 9.3 $\mu$m and 10.6 $\mu$m).

3.6 Short-Pulse $CO_2$ Laser Light Source outputting Laser Light of Two Wavelengths with use of Etalon

3.6.1 Configuration

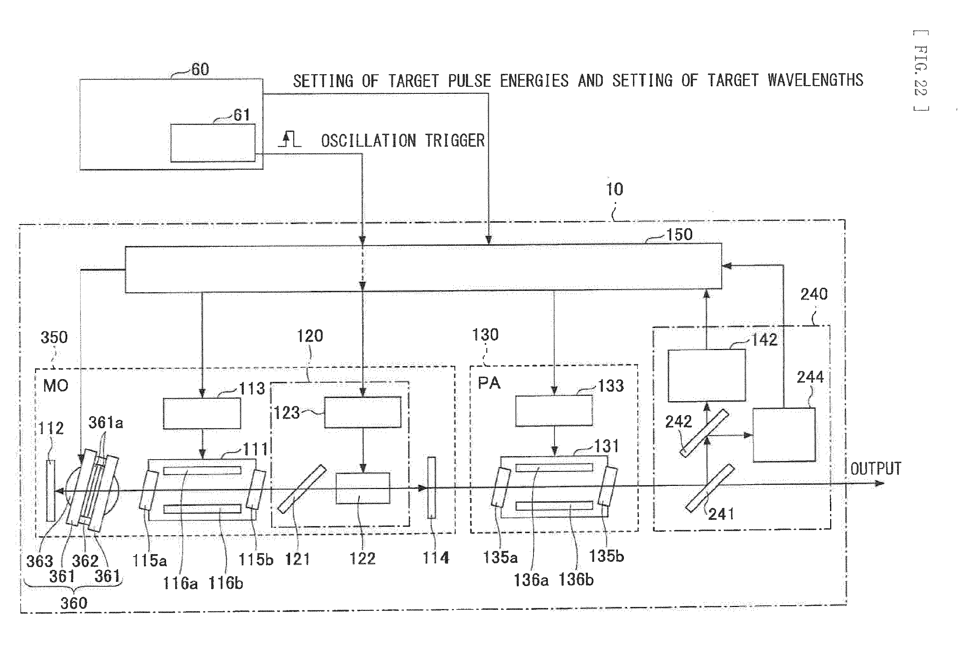

A description is given based on FIG. 22 of a short-pulse $CO_2$ laser light source that outputs laser light of two wavelengths with use of an etalon. The short-pulse $CO_2$ laser light source that outputs the laser light of two wavelengths with use of the etalon, illustrated in FIG. 22, may include, inside an optical resonator in the MO 350, a wavelength selective element 360 including the etalon.

The wavelength selective element 360 including the etalon may include two ZnSe substrates 361. One surface of each of the two ZnSe substrates 361 may be coated with a partially reflective film 361 a, and the surfaces coated with the respective partially reflective films 361 a may be opposed to each other with a spacer 362 in between to form the etalon. The thus-formed etalon may be provided on a rotary stage 363. Note that a reflectivity of each of the partially reflective films 361 a may be in a range from 70% to 90%.

The wavelength selective element 360 including the etalon may satisfy the following expression (4) where, for example, the wavelength of the laser light may be assumed as 9.95 $\mu$m and a refractive index n of nitrogen gas may be assumed as 1.000.

$$FSR = \lambda^2/(2nd) = 1.3 \ \mu m \qquad (4)$$

Based on the above expression (4), an interval, at the surfaces coated with the respective partially reflective films 361 a, between the two ZnSe substrates 361, i.e., a mirror interval of the etalon, may be defined as d = 31 $\mu$m.

Note that contents other than those described above may be similar to those of the short-pulse $CO_2$ laser light source including the wavelength selective element, illustrated in FIG. 16.

3.6.2 Operation

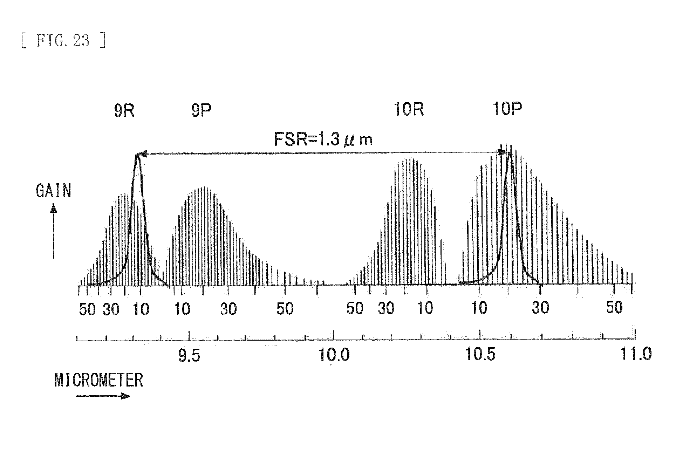

For example, when FSR is equal to 1.3 $\mu$m in the wavelength selective element 360 including the etalon, an angle of incidence of the etalon may be placed to a predetermined angle to set peak wavelengths of transmittance of the etalon to 9.3 $\mu$m and 10.6 $\mu$m as illustrated in FIG. 23.

Hence, the MO 350 may perform the oscillation based on two amplification lines that are near the peak wavelengths of the transmittance of the etalon and high in gain. The pulsed laser light derived from the oscillation based on the two amplification lines of the MO 350 may be amplified by the PA 130.

The pulsed laser light amplified by the PA 130 may enter the monitor module 240. Part of the laser light having entered the monitor module 240 may be reflected by the first beam splitter 241 in the monitor module 240. Further, part of the laser light reflected by the first beam splitter 241 may be branched by the second beam splitter 242 into light to be transmitted through the second beam splitter 242 and light to be reflected from the second beam splitter 242. The light transmitted through the second beam splitter 242 may enter the energy sensor 142, and the light reflected from the second beam splitter 242 may enter the wavelength sensor 244. In the monitor module 240, the peak wavelengths and the pulse energies of the laser light of the two different wavelengths may be measured respectively by the wavelength sensor 244 and the energy sensor 142. The laser controller 150 may so perform a feedback control as to allow the peak wavelengths and the pulse energies of the laser light of the two different wavelengths to meet the target wavelengths and the target pulse energies.

3.6.3 Action

The laser light source may output two pieces of pulsed laser light at the different wavelengths by so designing the wavelength selective element 360 including the etalon as to allow at least two peaks of the transmittance to be within a distribution of the amplification lines of the $CO_2$ laser medium. Also, the laser light source may be capable of varying the oscillation wavelength within the range of the amplification lines of the $CO_2$ laser gain medium while making a difference between the two oscillation wavelengths (FSR) to be substantially constant, by controlling the angle of incidence of the etalon in the wavelength selective element 360 including the etalon.

3.7 Wavelength-Variable Solid-State Laser Light Source

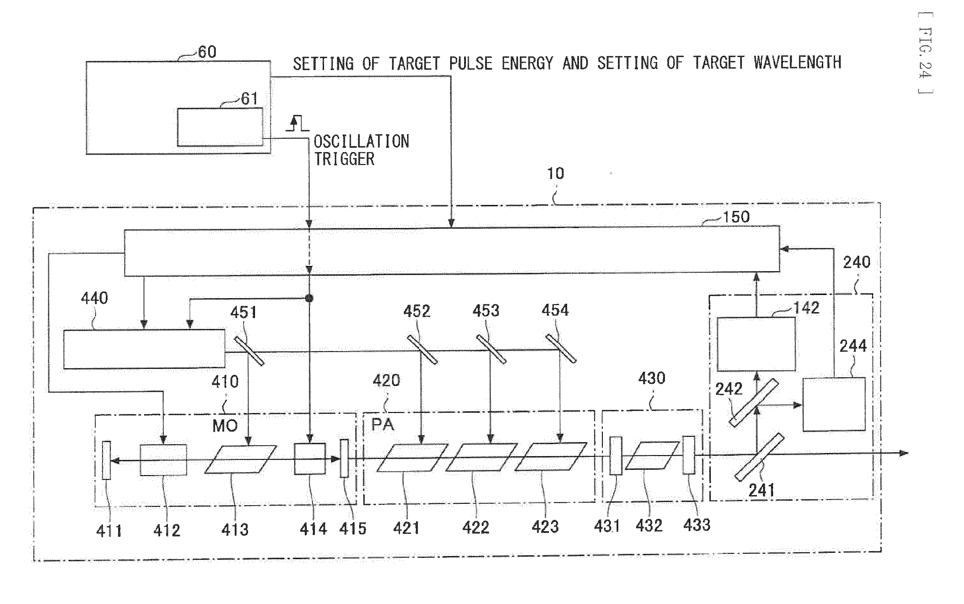

The laser light source 10 may be a wavelength-variable solid-state laser light source. A description is given based on FIG. 24 of the wavelength-variable solid-state laser light source.

### 3.7.1 Configuration

Referring to FIG. 24, the laser unit 10 may include an MO 410, a PA 420, an OPO (optical parametric oscillator) 430, the monitor module 240, an excitation pulsed laser light source 440, and the laser controller 150. Also, a third beam splitter 451, a fourth beam splitter 452, a fifth beam splitter 453, and a highly-reflective mirror 454 may be provided in an optical path of the pulsed laser light outputted from the excitation pulsed laser light source 440.

The excitation pulsed laser light source 440 may be a Tm-based pulsed laser unit (wavelength of 2 $\mu$m) that outputs the pulsed laser light at hundreds of nanoseconds and at a wavelength of 2 $\mu$m.

The MO 410 may include a highly-reflective mirror 411, a wavelength selective element 412, a Cr:ZnSe crystal 413, a Q switch 414, and an output coupling mirror 415. An optical resonator may be configured by the highly-reflective mirror 411 and the output coupling mirror 415, and the wavelength selective element 412, the Cr:ZnSe crystal 413, and the Q switch 414 may be provided in an optical path inside the optical resonator.

The wavelength selective element 412 may be a wavelength selective element such as an etalon, a grating, and a prism. The Q switch 414 may be a combination, unillustrated in FIG. 24, of a polarizer and an EO Pockels cell.

The PA 420 may include a plurality of Cr:ZnSe crystals, e.g., a first Cr:ZnSe crystal 421, a second Cr:ZnSe crystal 422, and a third Cr:ZnSe crystal 423, that may be disposed in the optical path of the pulsed laser light outputted from the MO 410.

The OPO 430 may include a highly-reflective mirror 431, a ZnGeP$_2$ crystal 432, and an output coupling mirror 433.

The monitor module 240 may include the first beam splitter 241, the second beam splitter 242, the energy sensor 142, and the wavelength sensor 244. The wavelength sensor 244 may be, unillustrated in FIG. 24, the spectrometer including the grating or the spectrometer including the etalon.

### 3.7.2 Operation

The laser controller 150 may receive the target wavelength and the target pulse energy from the controller 60. The laser controller 150 may send an excitation pulse energy corresponding to the target pulse energy to the excitation pulsed laser light source 440. The laser controller 150 may so control the wavelength selective element 412 in the MO 410 as to allow light of the target wavelength to be selected.

The laser controller 150 may send signals to the excitation pulsed laser light source 440 and the Q switch 414 in the MO 410, in synchronization with the oscillation trigger derived from the pulse oscillator 61 in the controller 60.

The pulsed laser light outputted from the excitation pulsed laser light source 440 may be reflected by the third beam splitter 451 to enter the Cr:ZnSe crystal 413 in the MO 410. On the other hand, the pulsed laser light outputted from the excitation pulsed laser light source 440 may be transmitted through the third beam splitter 451, following which the pulsed laser light transmitted through the third beam splitter 451 may be reflected by the fourth beam splitter 452. The pulsed laser light thus reflected by the fourth beam splitter 452 may enter the first Cr:ZnSe crystal 421 in the PA 420. Also, the pulsed laser light outputted from the excitation pulsed laser light source 440 may be transmitted through the third beam splitter 451 and the fourth beam splitter 452, following which the pulsed laser light transmitted through the third beam splitter 451 and the fourth beam splitter 452 may be reflected by the fifth beam splitter 453. The pulsed laser light thus reflected by the fifth beam splitter 453 may enter the second Cr:ZnSe crystal 422 in the PA 420. Further, the pulsed laser light outputted from the excitation pulsed laser light source 440 may be transmitted through the third beam splitter 451, the fourth beam splitter 452, and the fifth beam splitter 453, following which the pulsed laser light transmitted through the third beam splitter 451, the fourth beam splitter 452, and the fifth beam splitter 453 may be reflected by the highly-reflective mirror 454. The pulsed laser light thus reflected by the highly-reflective mirror 454 may enter the third Cr:ZnSe crystal 423 in the PA 420.

Hence, the Cr:ZnSe crystal 413 in the MO 410 as well as the first Cr:ZnSe crystal 421, the second Cr:ZnSe crystal 422, and the third Cr:ZnSe crystal 423 in the PA 420 may be excited.

In the optical resonator in the MO 410, the light of the wavelength selected by the wavelength selective element 412 may be amplified by the Cr:ZnSe crystal 413 to be subjected to laser oscillation before being outputted through the Q switch 414. The pulsed laser light outputted from the MO 410 may be the pulsed laser light (at about 15 ns) of a wavelength in a wavelength range from 2 $\mu$m to 2.7 $\mu$m.

The PA 420 may amplify the pulsed laser light outputted from the MO 410 by the excited first Cr:ZnSe crystal 421, second Cr:ZnSe crystal 422, and third Cr:ZnSe crystal 423.

The pulsed laser light amplified by the PA 420 is transmitted through the highly-reflective mirror 431 to enter the ZnGeP$_2$ crystal 432 in the OPO 430. This pulsed laser light may be subjected to optical parametric oscillation by the optical resonator configured by the output coupling mirror 433 and the highly-reflective mirror 431. The pulsed laser light having been subjected to the optical parametric oscillation may be outputted from the OPO 430 with the pulse width of about 15 ns, the wavelength in a range from 8 $\mu$m to 10 $\mu$m, and the pulse

energy of about 10 mJ.

The pulsed laser light having been subjected to the optical parametric oscillation may enter the monitor module 240. Part of the pulsed laser light having entered the monitor module 240 may be reflected by the first beam splitter 241 in the monitor module 240. Further, part of the laser light reflected by the first beam splitter 241 may be branched by the second beam splitter 242 into light to be transmitted through the second beam splitter 242 and light to be reflected from the second beam splitter 242. The light transmitted through the second beam splitter 242 may enter the energy sensor 142, and the light reflected from the second beam splitter 242 may enter the wavelength sensor 244.

The wavelength and the pulse energy of the pulsed laser light outputted from the OPO 430 may be measured by the wavelength sensor 244 and the energy sensor 142, and information on the measurement may be sent to the laser controller 150. The laser controller 150 may perform a feedback control of the transmission wavelength on the wavelength selective element 412, based on the wavelength measured by the wavelength sensor 244. Also, the laser controller 150 may perform a feedback control of the pulse energy on the excitation pulsed laser light source 440, based on the pulse energy measured by the energy sensor 142.

### 3.7.3 Action

The wavelength-variable solid-state laser light source makes it possible to perform generation of the pulsed laser light even at a shorter wavelength range (from 8 $\mu$m to 10 $\mu$m) than an oscillation wavelength range (from 9 $\mu$m to 11 $\mu$m) of a laser light source containing $CO_2$ laser gas.

### 4. Laser Processing Apparatus including Heating Section

### 4.1 Laser Processing Apparatus

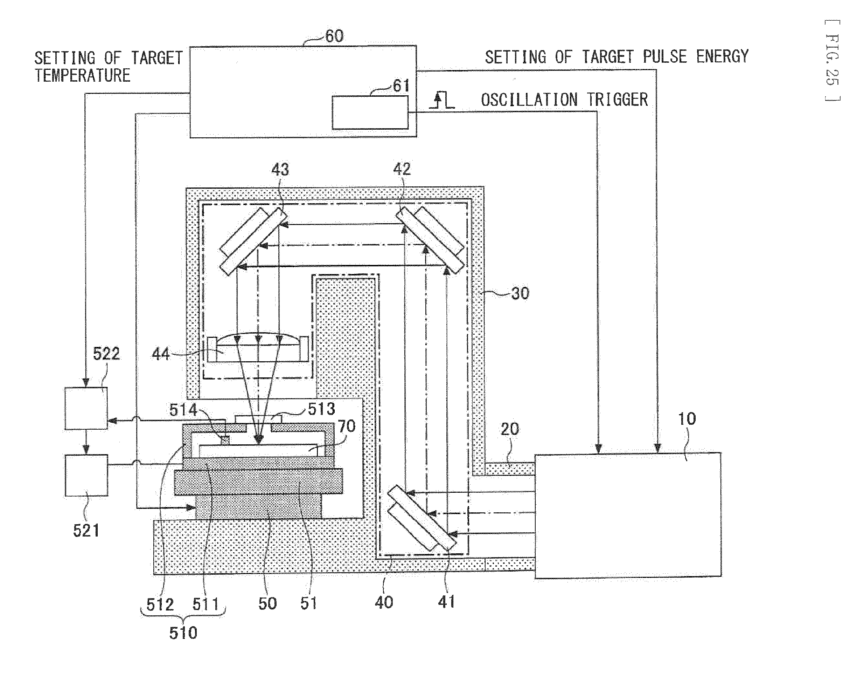

A description is given based on FIG. 25 of a laser processing apparatus that includes a heating section used to heat a workpiece.

Referring to FIG. 25, the laser processing apparatus including the heating section may be provided with a heating section 510 on the table 51. The heating section 510 may be provided with a heater 511 on the table 51 side, and the workpiece 70 may be placed on the heater 511. A housing 512 may be so provided as to cover the workpiece 70. The housing 512 may be provided with an opening section at a region where the pulsed laser light enters via the laser condensing optical member 44 such as a lens, and the opening section may be provided with a window section 513 which may be made of ZnSe.

Inside of the housing 512 may be provided with a temperature sensor 514. There may be provided a heater power supply 521 to be used to heat the heater 511, and a temperature controller 522 that measures a temperature by the temperature sensor 514 to control the heater 511 by the heater power supply 521. Hence, a control may be so performed as to allow the workpiece 70 to be at a predetermined temperature.

### 4.2 Laser Processing Method

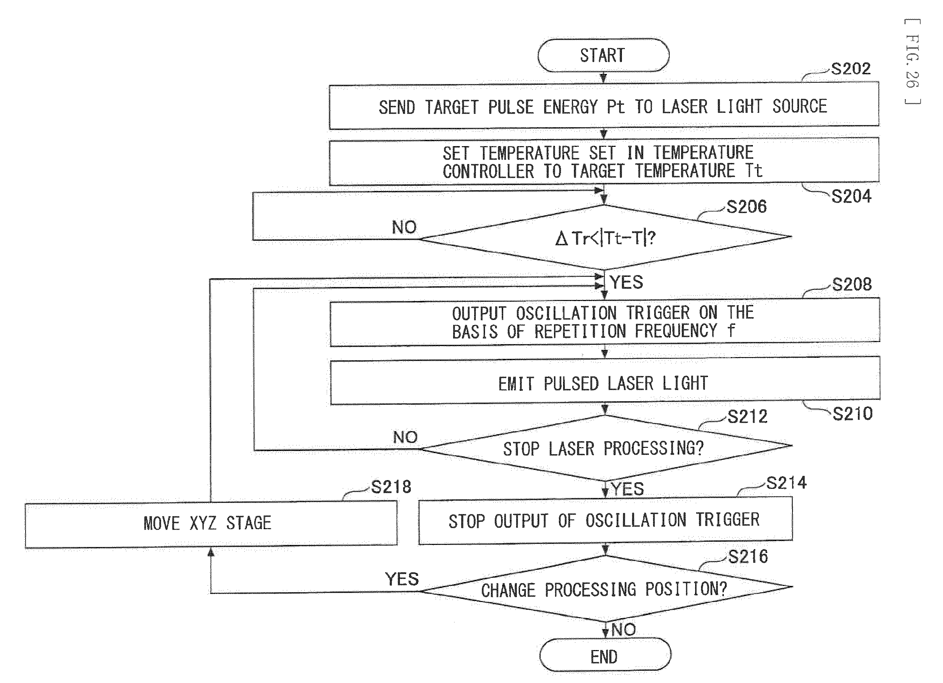

A description is given next, based on FIG. 26, of a laser processing method that uses the laser processing apparatus including the heating section.

First, in Step 202 (S202), the controller 60 may send the target pulse energy Pt to the laser light source 10. The laser light source 10 may be the short-pulse $CO_2$ laser light source. For example, the laser light source 10 may output the pulsed laser light whose pulse width is 30 ns, and may be capable of varying the wavelength in a range from 9 $\mu$m to 11 $\mu$m.

Next, in Step 204 (S204), the controller 60 may so set a temperature set in the temperature controller 522 as to be at the target temperature Tt. Here, the target temperature Tt may be set at a temperature equal to or greater than 400°C and less than 800°C when the workpiece 70 contains silica glass.

Next, in Step 206 (S206), a determination may be made as to whether or not a difference between the temperature measured by the temperature sensor 514 and the target temperature Tt is less than a predetermined temperature difference $\Delta$Tr, i.e., a determination may be made as to whether or not $\Delta$Tr < |Tt-T| is satisfied. When it is determined that $\Delta$Tr < |Tt- T| is satisfied, a transition may be made to Step 208. On the other hand, Step 206 may be performed again when it is determined that $\Delta$Tr < |Tt-T| is not satisfied. Here, the predetermined temperature difference $\Delta$Tr may be in a range from 1°C to 10°C, for example.

Next, in Step 208 (S208), the controller 60 may output the oscillation trigger, based on the repetition frequency f set in the pulse oscillator 61.

Next, in Step 210 (S210), the pulsed laser light may be outputted from the laser light source 10, based on the oscillation trigger. The thus-outputted pulsed laser light may be condensed, following which the silica glass substrate as the workpiece 70 may be irradiated with the condensed pulsed laser light.

Next, in Step 212 (S212), the controller 60 may determine whether or not to stop the processing performed by the laser processing apparatus. More specifically, a determination may be made as to whether or not it exceeds predetermined processing time or the predetermined number of pulses is emitted to determine whether or not to stop the processing performed by the laser processing apparatus. When it exceeds the predetermined processing time or when the predetermined number of pulses is emitted, the controller 60 may make a determination to stop the processing performed by the laser processing apparatus, and make a transition to Step 214. On the other hand, when it does not exceed the predetermined processing time or when the predetermined number of pulses is not emitted, the controller 60 may make a determination to continue the processing performed by the laser processing apparatus, and make a transition to Step 208.

Next, in Step 214 (S214), the controller 60 may stop the output of the oscillation trigger signal. More specifically, because the determination as to the stopping of the processing performed by the laser processing apparatus has been made in the Step 212, the controller 60 may stop the output of the oscillation trigger signal. Thereby, the outputting of the laser light from the laser light source 10 may be stopped as well.

Next, in Step 216 (S216), the controller 60 may determine whether or not to change a processing position of the silica glass substrate as the workpiece 70. A transition may be made to Step 218 when a determination is made in the controller 60 to change the processing position of the silica glass substrate as the workpiece 70. On the other hand, the processing performed by the laser processing apparatus may be ended when a determination is made in the controller 60 not to change the processing position of the silica glass substrate as the workpiece 70.

Next, in Step 218 (S218), the controller 60 may move the XYZ stage 50 to move the processing position of the silica glass substrate as the workpiece 70, i.e., to move a position to be irradiated with the pulsed laser light of the silica glass substrate as the workpiece 70.

This laser processing method may make it possible to increase an absorption coefficient of the wavelength of the pulsed laser light at the wavelength of 10.6 $\mu$m when the workpiece 70 is the glass substrate configured of silica glass, by heating the glass substrate with use of the heater 512 to allow the temperature of the glass substrate to be at about 400°C.

4.3 Third Description of Laser Processing brought into Practice

A description is given next of a case in which a silica glass substrate was used as the workpiece 70 in the laser processing apparatus of the disclosure. In this description, described is a result of an examination on a temperature dependency of the workpiece 70.

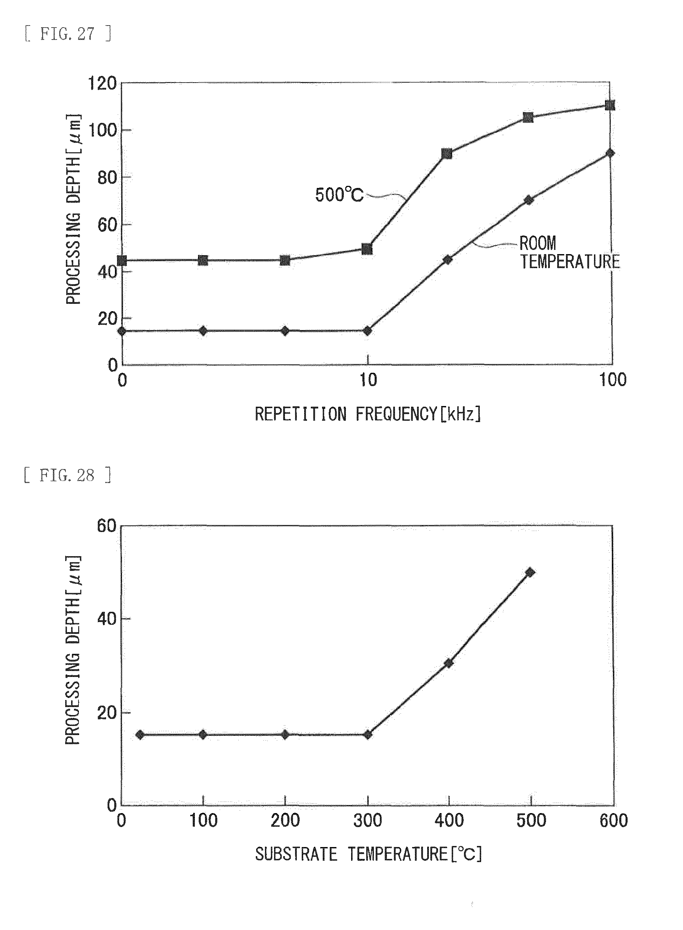

FIG. 27 illustrates a relationship of a repetition frequency versus a depth of a processed hole of an opening formed on the silica glass substrate as the workpiece 70, where temperatures of the silica glass substrate as the workpiece 70 were at a room temperature and at 500°C. The conditions of laser processing included a wavelength of pulsed laser light of 10.6 $\mu$m, a pulse width of 10 ns, an emission energy density of 2 J/cm$^2$·pulse, and the number of times of emission of 800 shots. Even with the same repetition frequency, the processing depth of the opening was deeper and thus the processing was promoted in a case where the temperature of the silica glass substrate was 500°C, as compared with a case where the temperature of the silica glass substrate was at an ordinary temperature.

FIG. 28 illustrates a relationship of a temperature of a silica glass substrate versus a depth of a processed hole of an opening formed on the silica glass substrate as the workpiece 70. The conditions of laser processing included a wavelength of pulsed laser light of 10.6 $\mu$m, a repetition frequency of 10 kHz, a pulse width of 10 ns, an emission energy density of 2 J/cm$^2$·pulse, and the number of times of emission of 800 shots. As illustrated in FIG. 28, the processing depth of the opening was deeper and thus the processing was promoted when the temperature of the silica glass substrate was 400°C or higher. Presumably, because a variation occurs in a light absorption coefficient of silica glass in a high temperature, an absorption coefficient of the pulsed laser light used for the laser processing was increased and thereby the processing by means of the laser processing was promoted especially upon the temperature of the silica glass substrate of 400°C or higher.

Note that, in a case where the workpiece is a hard glass substrate, heating with use of a heater or a lamp from the stage side upon performing heating of the hard glass substrate may cause strain resulting from a temperature gradient inside the hard glass substrate, which may lead to breakage of the hard glass substrate upon increase and decrease of the temperature. To suppress such breakage of the hard glass substrate, it is necessary that the temperature of the hard glass substrate be increased and decreased without causing the temperature gradient inside the hard glass substrate. Hence, when the workpiece is the hard glass substrate, etc., a method such as heating with use of an oven and heating performed while both surfaces of the hard glass substrate are sandwiched by Si may be preferable to reduce the temperature gradient inside the hard glass substrate, etc.

5. Laser Processing Apparatus including Wavelength-Variable Laser Light Source

5.1 Laser Processing Apparatus

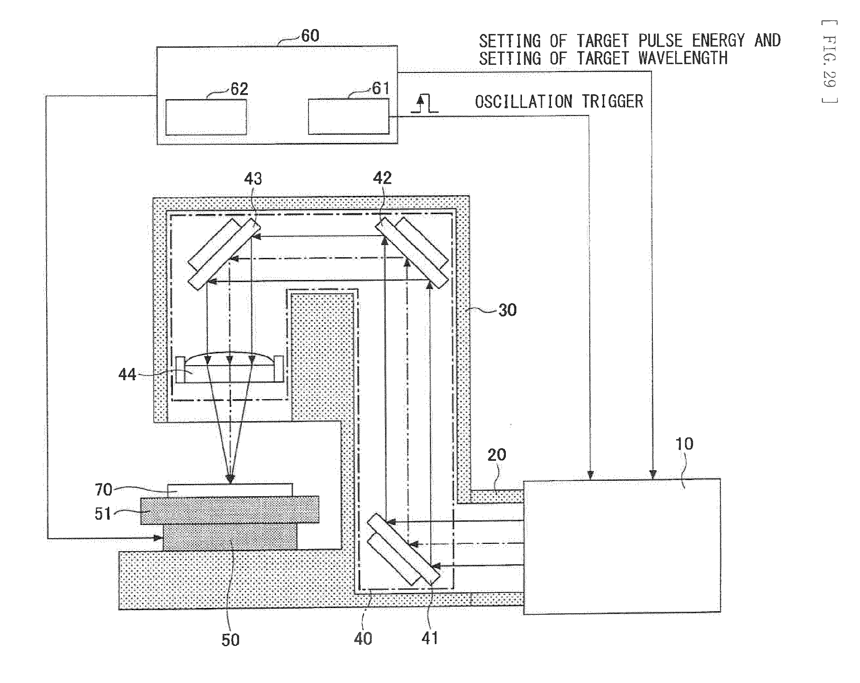

A description is given based on FIG. 29 of a laser processing apparatus that includes a wavelength-variable laser light source.

Referring to FIG. 29, the laser processing apparatus including the wavelength-variable laser light source may include, as the laser light source 10, a wavelength-variable laser light source capable of varying a wavelength to be outputted. The wavelength-variable laser light source may be variable in wavelength of laser light to be outputted in a range from 9 $\mu$m to 11 $\mu$m. Such a wavelength-variable laser light source may be a laser light source such as, for example, any of the laser light sources illustrated in FIGs. 16, 18, and 24.

Also, in this laser processing apparatus, the controller 60 may be provided with a memory section 62.

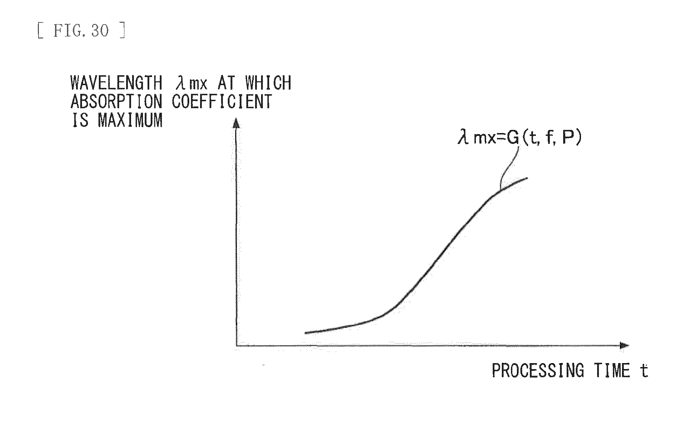

The memory section 62 may be stored therein with a relational expression $\lambda mx=G(t, f, P)$ that may define a relationship among a wavelength $\lambda mx$ at which the absorption coefficient is the maximum, processing time t, the repetition frequency f, and a pulse energy P. A relationship between the wavelength $\lambda mx$ at which the absorption coefficient is the maximum and the processing time t in the relational expression $\lambda mx=G(t, f, P)$ may be a relationship in which the wavelength $\lambda mx$ at which the absorption coefficient is the maximum increases with the increase in the processing time t as illustrated in FIG. 30.

5.2 Laser Processing Method

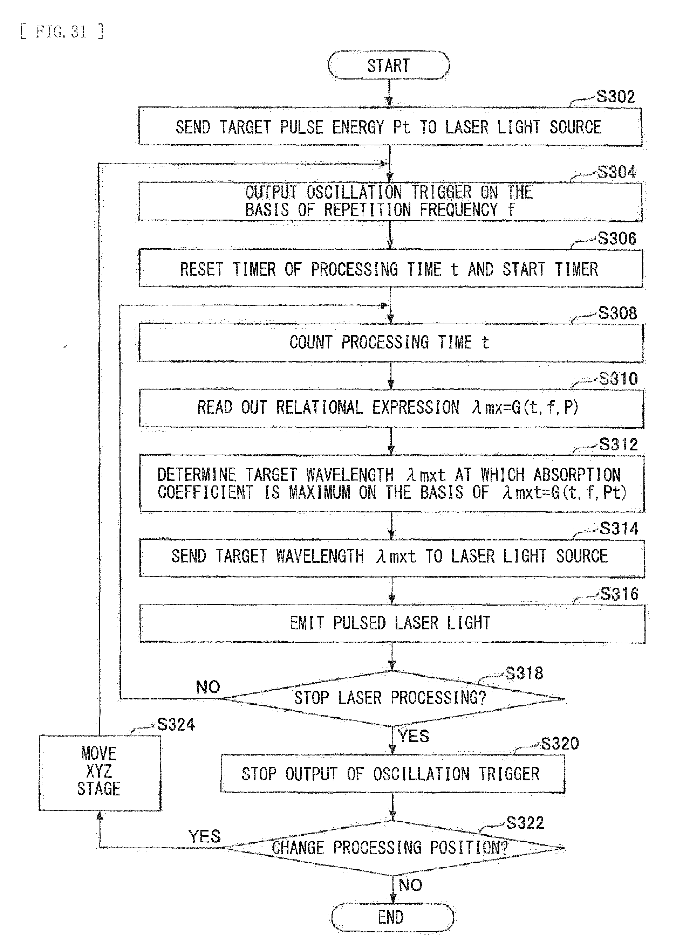

A description is given next, based on FIG. 31, of a laser processing method that uses the laser processing apparatus including the wavelength-variable laser light source.

First, in Step 302 (S302), the controller 60 may send the target pulse energy Pt to the laser light source 10. The laser light source 10 may be the short-pulse $CO_2$ laser light source. For example, the laser light source 10 may output pulsed laser light whose pulse width is 30 ns, and may be capable of varying the wavelength in a range from 9 $\mu$m to 11 $\mu$m.

Next, in Step 304 (S304), the controller 60 may output the oscillation trigger, based on the repetition frequency f set in the pulse oscillator 61.

Next, in Step 306 (S306), the controller 60 may reset a timer of the processing time t and then start the timer.

Next, in Step 308 (S308), the controller 60 may measure the processing time t, based on the timer started in the Step 306.

Next, in Step 310 (S310), the relational expression $\lambda mx=G(t, f, P)$ may be read out from the memory section 62 of the controller 60 that may define the relationship among the wavelength $\lambda mx$ at which the absorption coefficient is the maximum, the processing time t, the repetition frequency f, and the pulse energy P.

Next, in Step 312 (S312), the controller 60 may determine a target wavelength $\lambda mxt$ at which the absorption coefficient is the maximum, based on the target pulse energy Pt, the processing time t, and the repetition frequency f.

Next, in Step 314 (S314), the controller 60 may send the target wavelength $\lambda mxt$ at which the absorption coefficient is the maximum, determined in the Step 312, to the laser light source 10.

Next, in Step 316 (S316), the pulsed laser light may be outputted from the laser light source 10, based on the oscillation trigger. The thus-outputted pulsed laser light may be condensed, following which the silica glass substrate as the workpiece 70 may be irradiated with the condensed pulsed laser light.

Next, in Step 318 (S318), the controller 60 may determine whether or not to stop the processing performed by the laser processing apparatus. More specifically, a determination may be made as to whether or not it exceeds predetermined processing time or the predetermined number of pulses is emitted to determine whether or not to stop the processing performed by the laser processing apparatus. When it exceeds the predetermined processing time or when the predetermined number of pulses is emitted, the controller 60 may make a determination to stop the processing performed by the laser processing apparatus, and make a transition to Step 320. On the other hand, when it does not exceed the predetermined processing time or when the predetermined number of pulses is not emitted, the controller 60 may make a determination to continue the processing performed by the laser processing apparatus, and make a transition to Step 308.

Next, in Step 320 (S320), the controller 60 may stop the output of the oscillation trigger signal. More specifically, because the determination as to the stopping of the processing performed by the laser processing apparatus has been made in the Step 318, the controller 60 may stop the output of the oscillation trigger signal. Thereby, the outputting of the laser light from the laser light source 10 may be stopped as well.

Next, in Step 322 (S322), the controller 60 may determine whether or not to change a processing position of the silica glass substrate as the workpiece 70. A transition may be made to Step 324 when a determination is made in the controller 60 to change the processing position of the silica glass substrate as the workpiece 70. On the other hand, the processing performed by the laser processing apparatus may be ended when a determination is made in the controller 60 not to change the processing position of the silica glass substrate as the workpiece 70.

Next, in Step 324 (S324), the controller 60 may move the XYZ stage 50 to move the processing position of the silica glass substrate as the workpiece 70, i.e., to move a position to be irradiated with the pulsed laser light of the silica glass substrate as the workpiece 70.

In this laser processing method, the controller 60 may determine the target wavelength $\lambda mxt$ at which the absorption coefficient is the maximum, based on the relational expression, etc., that may define the relationship among the wavelength $\lambda mx$ at which the absorption coefficient is the maximum, the processing time t, the repetition frequency f, and the pulse energy P. Controlling the oscillation wavelength of the laser light source 10 to meet the thus-determined target wavelength $\lambda mxt$ at which the absorption coefficient is the maximum may maximize light to be absorbed by the workpiece 70 such as silica glass.

6. Laser Processing Apparatus including Temperature Measuring Section for Workpiece

6.1 Laser Processing Apparatus

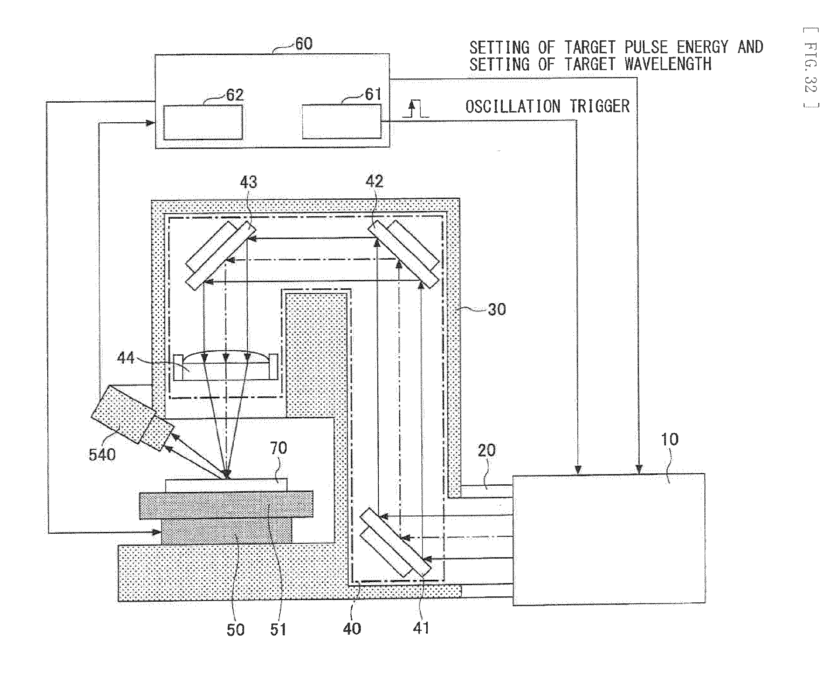

A description is given based on FIG. 32 of a laser processing apparatus that includes a temperature measuring section for workpiece.

Referring to FIG. 32, the laser processing apparatus including the temperature measuring section for workpiece may include a temperature measuring section that measures a temperature at a laser processed region on the workpiece 70. The temperature measuring section 540 may be a radiation thermometer. The radiation thermometer may measure the temperature, based on infrared light, etc., of a wavelength different from the wavelength of the pulsed laser light outputted from the laser unit. For example, a detection device used to detect the temperature may be configured of InGaAs. The detection device configured of InGaAs may involve a detection wavelength of 1.55 $\mu$m, and a measured temperature range may range from 300°C to 1600°C.

The wavelength-variable laser light source capable of varying a wavelength to be outputted may be used as the laser light source 10. The wavelength-variable laser light source may be variable in wavelength of laser light to be outputted in a range from 9 $\mu$m to 11 $\mu$m. Such a wavelength-variable laser light source may be a laser light source such as, for example, any of the laser light sources illustrated in FIGs. 16, 18, and 24.

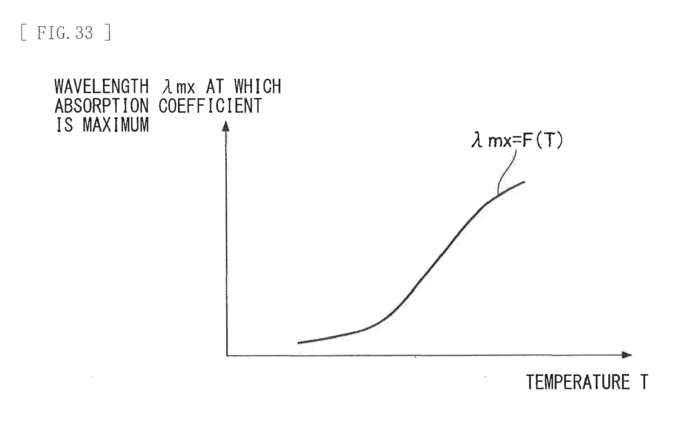

Also, in this laser processing apparatus, the controller 60 may be provided with the memory section 62. The memory section 62 may be stored therein with a relational expression $\lambda mx=F(T)$ that may define a relationship between the wavelength $\lambda mx$ at which the absorption coefficient is the maximum and a temperature T at the laser processed region on the workpiece 70. A relationship between the wavelength $\lambda mx$ at which the absorption coefficient is the maximum and the temperature T in the relational expression $\lambda mx=F(T)$ may be a relationship in which the wavelength $\lambda mx$ at which the absorption coefficient is the maximum increases with the increase in the temperature T as illustrated in FIG. 33. The relationship between the wavelength $\lambda mx$ at which the absorption coefficient is the maximum and the temperature T may be determined from data derived from actual measurement, or may be obtained based on literature, etc.

6.2 Laser Processing Method

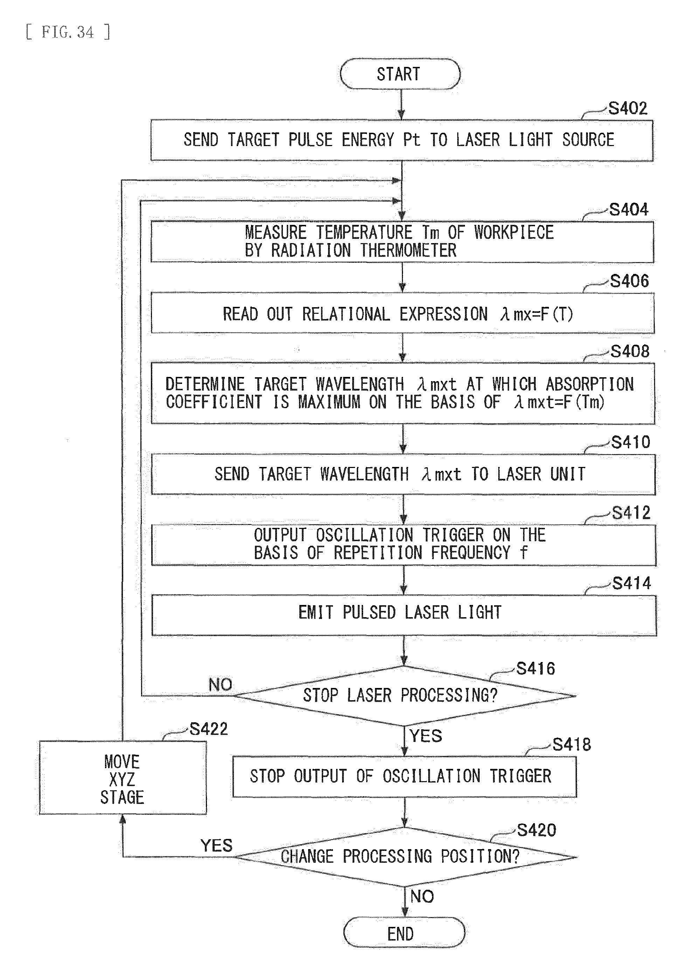

A description is given next, based on FIG. 34, of a laser processing method that uses the laser processing apparatus including the temperature measuring section for workpiece.

First, in Step 402 (S402), the controller 60 may send the target pulse energy Pt to the laser light source 10. The laser light source 10 may be the short-pulse $CO_2$ laser light source. For example, the laser light source 10 may output pulsed laser light whose pulse width is 30 ns, and may be capable of varying the wavelength in a range from 9 $\mu$m to 11 $\mu$m.

Next, in Step 404 (S404), a temperature Tm of the workpiece 70 may be measured by the radiation thermometer serving as the temperature measuring section 540.

Next, in Step 406 (S406), the relational expression $\lambda mx=F(T)$ may be read out from the memory section 62 of the controller 60 that may define the relationship between the wavelength $\lambda mx$ at which the absorption coefficient is the maximum and the temperature T at the processed region on the workpiece 70.

Next, in Step 408 (S408), the controller 60 may determine the target wavelength $\lambda mxt$ at which the absorption coefficient is the maximum, based on the temperature Tm of the workpiece 70 measured by the radiation thermometer serving as the temperature measuring section 540.

Next, in Step 410 (S410), the controller 60 may send the target wavelength $\lambda mxt$ at which the absorption coefficient is the maximum, determined in the Step 408, to the laser light source 10.

Next, in Step 412 (S412), the controller 60 may output the oscillation trigger, based on the repetition frequency f set in the pulse oscillator 61.

Next, in Step 414 (S414), the pulsed laser light may be outputted from the laser light source 10, based on the oscillation trigger. The thus-outputted pulsed laser light may be condensed, following which the silica glass substrate as the workpiece 70 may be irradiated with the condensed pulsed laser light.

Next, in Step 416 (S416), the controller 60 may determine whether or not to stop the processing performed by the laser processing apparatus. More specifically, a determination may be made as to whether or not it exceeds predetermined processing time or the predetermined number of pulses is emitted to determine whether or not to stop the processing performed by the laser processing apparatus. When it exceeds the predetermined processing time or when the predetermined number of pulses is emitted, the controller 60 may make a determination to stop the processing performed by the laser processing apparatus, and make a transition to Step 418. On the other hand, when it does not exceed the predetermined processing time or when the predetermined number of pulses is not emitted, the controller 60 may make a determination to continue the processing performed by the laser processing apparatus, and make a transition to Step 404.

Next, in Step 418 (S418), the controller 60 may stop the output of the oscillation trigger signal. More specifically, because the determination as to the stopping of the processing performed by the laser processing apparatus has been made in the Step 416, the controller 60 may stop the output of the oscillation trigger signal. Thereby, the outputting of the laser light from the laser light source 10 may be stopped as well.

Next, in Step 420 (S420), the controller 60 may determine whether or not to change a processing position of the silica glass substrate as the workpiece 70. A transition may be made to Step 422 when a determination is made in the controller 60 to change the processing position of the silica glass substrate as the workpiece 70. On the other hand, the processing performed by the laser processing apparatus may be ended when a determination is made in the controller 60 not to change the processing position of the silica glass substrate as the workpiece 70.

Next, in Step 422 (S422), the controller 60 may move the XYZ stage 50 to move the processing position of the silica glass substrate as the workpiece 70, i.e., to move a position to be irradiated with the pulsed laser light of the silica glass substrate as the workpiece 70.

In this laser processing method, the temperature Tm at the processed region on the workpiece 70 may be measured by the radiation thermometer serving as the temperature measuring section 540. Determining the target wavelength λmxt at which the absorption coefficient is the maximum on the basis of the thus-measured temperature Tm and controlling the oscillation wavelength of the laser light source 10 to meet the target wavelength λmxt by the controller 60 may maximize absorption of light of the workpiece 70 constantly.

## 7. Laser Processing Apparatus including Laser Light Source outputting Pieces of Laser Light of respective Two Wavelengths

### 7.1 Laser Processing Apparatus

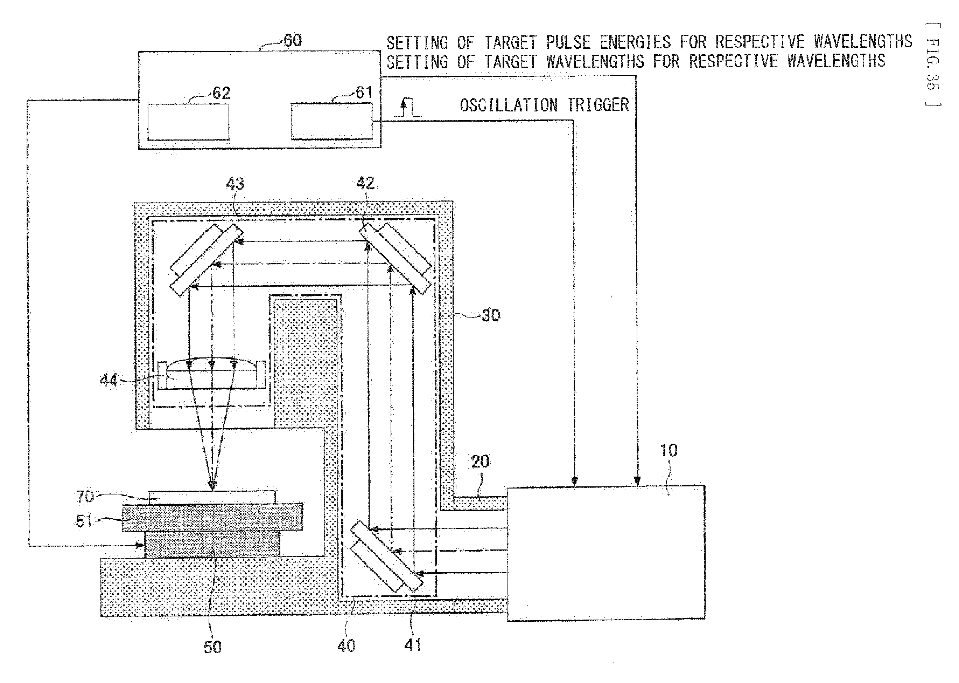

A description is given based on FIG. 35 of a laser processing apparatus that includes a laser light source outputting pieces of laser light of respective two wavelengths.

Referring to FIG. 35, in the laser processing apparatus that includes the laser light source outputting the pieces of laser light of respective two wavelengths, laser light outputted from the laser light source 10 may contain, as a wavelength, both a wavelength (λ1) in a range from 9 μm to 10 μm and a wavelength (λ2) in a range from 10 μm to 11 μm. Such a wavelength-variable laser light source may be a laser light source such as, for example, any of the laser light sources illustrated in FIGs. 19 and 21.

Also, the controller 60 may set, to the laser light source 10, the target wavelengths (λ1t and λ2t) and the target pulse energies (P1t and P2t) for the respective two wavelengths.

Note that glass used as an electronic device material, such as synthetic quartz and alkali-free glass, may often involve the largest absorption coefficient at a wavelength ranging from 8 μm to 10 μm at a room temperature, and may involve the largest absorption coefficient of light at a wavelength ranging from 10 μm to 11 μm around a temperature of 2000 K at which the laser processing is performed. Hence, emission of the laser light at the wavelength ranging from 8 μm to 10 μm and the laser light at the wavelength ranging from 10 μm to 11 μm together may suppress a variation in absorption characteristics resulting from a change in temperature of the workpiece upon the laser processing, and may allow for uniform increase in temperature to achieve the laser processing with reduced thermal strain.

### 7.2 Laser Processing Method (1)

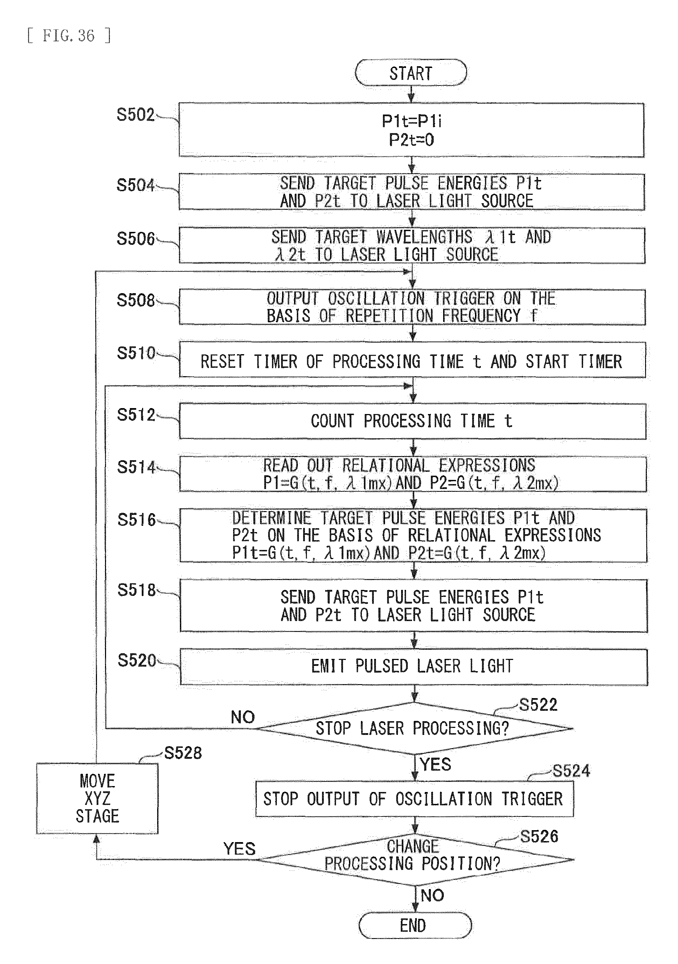

A description is given next, based on FIG. 36, of a laser processing method that uses the laser processing apparatus that includes the laser light source outputting the pieces of laser light of respective two wavelengths. In this laser processing method, the short-pulse $CO_2$ laser light source that outputs the pieces of laser light of respective two wavelengths, illustrated in FIG. 19, may be used as the laser light source 10.

First, in Step 502 (S502), the controller 60 may set the target pulse energy P1 of the pulsed laser light at the first wavelength λ1 to P1i, and set the target pulse energy P2t of the pulsed laser light at the second wavelength λ2 to 0.

Next, in Step 504 (S504), the controller 60 may send, to the laser light source 10, the target pulse energy P1t of the pulsed laser light at the first wavelength λ1 and the target pulse energy P2t of the pulsed laser light at the second wavelength λ2. The laser light source 10 may be the short-pulse $CO_2$ laser light source. For example, the laser light source 10 may output both the pulsed laser light at the first wavelength λ1 in a wavelength range from 9 μm to 10 μm and the pulsed laser light at the second wavelength λ2 in a wavelength range from 10 μm to 11 μm. Also, each pulsed laser light outputted from the laser light source 10 may involve a pulse width of 30 ns.

Next, in Step 506 (S506), the controller 60 may send, to the laser light source 10, the target wavelength λ1t of the pulsed laser light at the first wavelength λ1 and the target wavelength λ2t of the pulsed laser light at the second wavelength λ2.

Next, in Step 508 (S508), the controller 60 may output the oscillation trigger, based on the repetition frequency f set in the pulse oscillator 61.

Next, in Step 510 (S510), the controller 60 may reset a timer of the processing time t and then start the timer.

Next, in Step 512 (S512), the controller 60 may measure the processing time t, based on the timer started in the Step 510.

Next, in Step 514 (S514), a relational expression P1=G(t, f, λ1mx) may be read out from the memory section 62 of the controller 60 that may define a relationship among a first wavelength λ1mx at which the absorption coefficient is the maximum, the processing time t, the repetition frequency f, and the pulse energy P1. Also, a relational expression P2=G(t, f, λ2mx) may be read out from the memory section 62 of the controller 60 that may define a relationship among a second wavelength λ2mx at which the absorption coefficient is the maximum, the processing time t, the repetition frequency f, and the pulse energy P2.

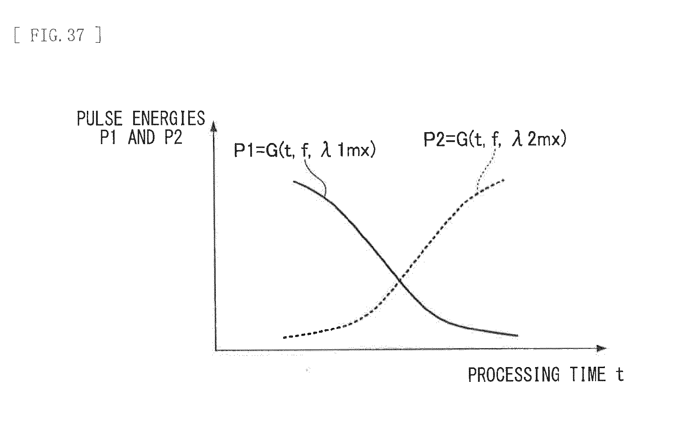

The relational expression P1=G(t, f, λ1mx) may be obtained from experimental data, etc., on a relationship among the processing time t, the repetition frequency f, the first wavelength $\lambda 1mx$ at which the absorption coefficient is the maximum, and the pulse energy P1, for example. Also, the relational expression $P2=G(t, f, \lambda 2mx)$ may be obtained from experimental data, etc. on a relationship among the processing time t, the repetition frequency f, the second wavelength $\lambda 2mx$ at which the absorption coefficient is the maximum, and the pulse energy P2, for example. More specifically, the relational expression $P2=G(t, f, \lambda 2mx)$ may be obtained from experimental data, etc. such that absorption in the workpiece 70 of the pulsed laser light at the second wavelength $\lambda 2$ becomes the maximum upon performing of the oscillation with use of the two wavelengths. A correlation between the processing time t and the pulse energy P1 in the relational expression $P1=G(t, f, \lambda 1mx)$ and a correlation between the processing time t and the pulse energy P2 in the relational expression $P2=G(t, f, \lambda 2mx)$ may be respective correlations illustrated in FIG. 37. In other words, the pulsed laser light at the first wavelength $\lambda 1mx$ at which the absorption coefficient is the maximum may involve the pulse energy P1 that may decrease with an elapse of the processing time t, and the pulsed laser light at the second wavelength $\lambda 2mx$ at which the absorption coefficient is the maximum may involve the pulse energy P2 that may increase with the elapse of the processing time t.

Next, in Step 516 (S516), the controller 60 may determine the target pulse energy P1 of the pulsed laser light at the first wavelength $\lambda 1$, based on a target wavelength $\lambda 1$ mxt at which the absorption coefficient is the maximum, the processing time t, and the repetition frequency f. Also, the controller 60 may determine the target pulse energy P2t of the pulsed laser light at the second wavelength $\lambda 2$, based on a target wavelength $\lambda 2mxt$ at which the absorption coefficient is the maximum, the processing time t, and the repetition frequency f. The pulse energy P1t may be determined from an expression $P1t=G(t, f, \lambda 1tmx)$ that is obtained based on the relational expression read out in the Step 514, and the pulse energy P2t may be determined from an expression $P2t=G(t, f, \lambda 2tmx)$ that is obtained based on the relational expression read out in the Step 514.

Next, in Step 518 (S518), the controller 60 may send the target pulse energies P1t and P2t at each of which the absorption coefficient is the maximum, determined in the Step 516, to the laser light source 10.

Next, in Step 520 (S520), the pieces of pulsed laser light may be outputted from the laser light source 10, based on the oscillation trigger. The thus-outputted pieces of pulsed laser light may be condensed, following which the silica glass substrate as the workpiece 70 may be irradiated with the condensed pieces of pulsed laser light.

Next, in Step 522 (S522), the controller 60 may determine whether or not to stop the processing performed by the laser processing apparatus. More specifically, a determination may be made as to whether or not it exceeds predetermined processing time or the predetermined number of pulses is emitted to determine whether or not to stop the processing performed by the laser processing apparatus. When it exceeds the predetermined processing time or when the predetermined number of pulses is emitted, the controller 60 may make a determination to stop the processing performed by the laser processing apparatus, and make a transition to Step 524. On the other hand, when it does not exceed the predetermined processing time or when the predetermined number of pulses is not emitted, the controller 60 may make a determination to continue the processing performed by the laser processing apparatus, and make a transition to Step 512.

Next, in Step 524 (S524), the controller 60 may stop the output of the oscillation trigger signal. More specifically, because the determination as to the stopping of the processing performed by the laser processing apparatus has been made in the Step 522, the controller 60 may stop the output of the oscillation trigger signal. Thereby, the outputting of the pieces of laser light from the laser light source 10 may be stopped as well.

Next, in Step 526 (S526), the controller 60 may determine whether or not to change a processing position of the silica glass substrate as the workpiece 70. A transition may be made to Step 528 when a determination is made in the controller 60 to change the processing position of the silica glass substrate as the workpiece 70. On the other hand, the processing performed by the laser processing apparatus may be ended when a determination is made in the controller 60 not to change the processing position of the silica glass substrate as the workpiece 70.

Next, in Step 528 (S528), the controller 60 may move the XYZ stage 50 to move the processing position of the silica glass substrate as the workpiece 70, i.e., to move a position to be irradiated with the pieces of pulsed laser light of the silica glass substrate as the workpiece 70.

This laser processing method makes it possible for the laser light source 10 to so set the respective pulse energies P1 and P2 of the pieces of pulsed laser light at the respective two wavelengths ($\lambda 1$ and ($\lambda 2$) as to allow the absorption in the workpiece 70 of the pieces of pulsed laser light to be increased with the elapse of processing time. Hence, the absorption in the workpiece of the pulsed laser light is larger than that in a case where laser processing is performed using a single wavelength, which may allow for reduction of processing time.

7.3 Laser Processing Method (2)

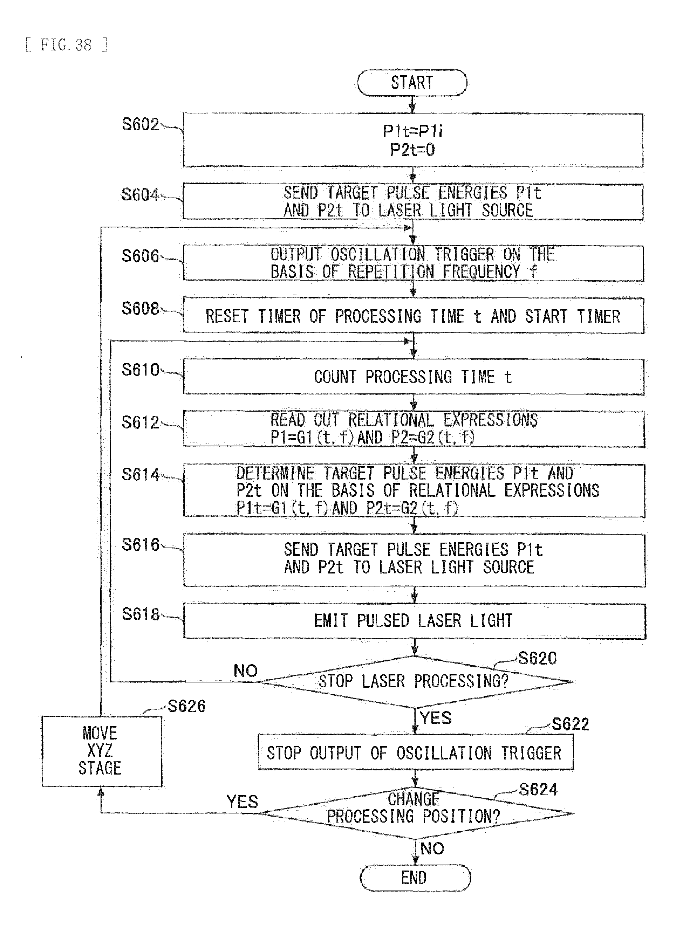

A description is given next, based on FIG. 38, of another laser processing method that uses the laser processing apparatus that includes the laser light source outputting the pieces of laser light of respective two wavelengths. In this laser processing method, the short-pulse $CO_2$ laser light source that outputs the pieces of laser light of respective two wavelengths, illustrated in FIG. 21, may be used as the laser light source 10.

First, in Step 602 (S602), the controller 60 may set the target pulse energy Pt1 of the pulsed laser light at the first wavelength $\lambda$1 to P1i, and set the target pulse energy P2t of the pulsed laser light at the second wavelength $\lambda$2 to 0.

Next, in Step 604 (S604), the controller 60 may send, to the laser light source 10, the target pulse energy P1t of the pulsed laser light at the first wavelength $\lambda$1 and the target pulse energy P2t of the pulsed laser light at the second wavelength $\lambda$2. The laser light source 10 may be the short-pulse $CO_2$ laser light source. For example, the laser light source 10 may output both the pulsed laser light at the first wavelength $\lambda$1 in the wavelength range from 9 $\mu$m to 10 $\mu$m and the pulsed laser light at the second wavelength $\lambda$2 in the wavelength range from 10 $\mu$m to 11 $\mu$m. Also, each pulsed laser light outputted from the laser light source 10 may involve the pulse width of 30 ns.

Next, in Step 606 (S606), the controller 60 may output the oscillation trigger, based on the repetition frequency f set in the pulse oscillator 61.

Next, in Step 608 (S608), the controller 60 may reset a timer of the processing time t and then start the timer.

Next, in Step 610 (S610), the controller 60 may measure the processing time t, based on the timer started in the Step 608.

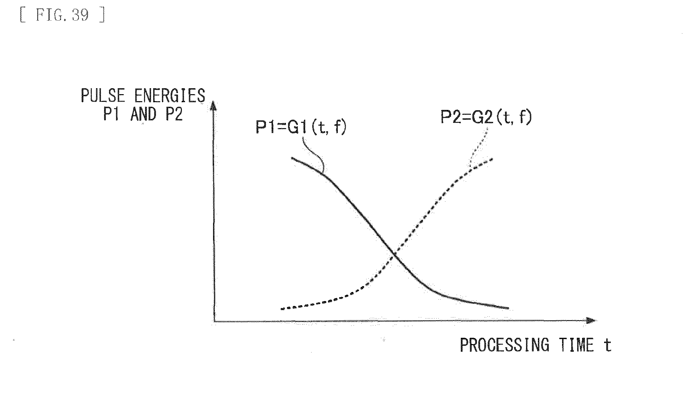

Next, in Step 612 (S612), a relational expression P1=G1(t, f) may be read out from the memory section 62 of the controller 60 that may define a relationship among the processing time t, the repetition frequency f, and the pulse energy P1 of the pulsed laser light at the first wavelength $\lambda$1. Also, a relational expression P2=G2(t, f) may be read out from the memory section 62 of the controller 60 that may define a relationship among the processing time t, the repetition frequency f, and the pulse energy P2 of the pulsed laser light at the second wavelength $\lambda$2. The relational expression P1=G1 (t, f) may be obtained from experimental data, etc., on a relationship among the processing time t, the repetition frequency f, and the pulse energy P1 of the pulsed laser light at the first wavelength $\lambda$1, for example. Also, the relational expression P2=G2(t, f) may be obtained from experimental data, etc., on a relationship among the processing time t, the repetition frequency f, and the pulse energy P2 of the pulsed laser light at the second wavelength $\lambda$2, for example. More specifically, the relational expression P2=G2(t, f) may be obtained from experimental data, etc. such that absorption in the workpiece 70 of the pulsed laser light at the second wavelength $\lambda$2 becomes the maximum upon performing of the oscillation with use of the two wavelengths. A correlation between the processing time t and the pulse energy P1 in the relational expression P1=G1 (t, f) and a correlation between the processing time t and the pulse energy P2 in the relational expression P2=G2(t, f) may be respective correlations illustrated in FIG. 39. In other words, the pulsed laser light at the first wavelength $\lambda$1 may involve the pulse energy P1 that may decrease with an elapse of the processing time t, and the pulsed laser light at the second wavelength $\lambda$2 may involve the pulse energy P2 that may increase with the elapse of the processing time t.

Next, in Step 614 (S614), the controller 60 may determine the target pulse energy P1t of the pulsed laser light at the first wavelength $\lambda$1, based on the processing time t and the repetition frequency f. Also, the controller 60 may determine the target pulse energy P2t of the pulsed laser light at the second wavelength $\lambda$2, based on the processing time t and the repetition frequency f. The pulse energy P1t may be determined from an expression P1t=G1(t, f) that is obtained based on the relational expression read out in the Step 612, and the pulse energy P2t may be determined from an expression P2t=G2(t, f) that is obtained based on the relational expression read out in the Step 612.

Next, in Step 616 (S616), the controller 60 may send the target pulse energies P1t and P2t at each of which the absorption coefficient is the maximum, determined in the Step 614, to the laser light source 10.

Next, in Step 618 (S618), the pieces of pulsed laser light may be outputted from the laser light source 10, based on the oscillation trigger. The thus-outputted pieces of pulsed laser light may be condensed, following which the silica glass substrate as the workpiece 70 may be irradiated with the condensed pieces of pulsed laser light.

Next, in Step 620 (S620), the controller 60 may determine whether or not to stop the processing performed by the laser processing apparatus. More specifically, a determination may be made as to whether or not it exceeds predetermined processing time or the predetermined number of pulses is emitted to determine whether or not to stop the processing performed by the laser processing apparatus. When it exceeds the predetermined processing time or when the predetermined number of pulses is emitted, the controller 60 may make a determination to stop the processing performed by the laser processing apparatus, and make a transition to Step 622. On the other hand, when it does not exceed the predetermined processing time or when the predetermined number of pulses is not emitted, the controller 60 may make a determination to continue the processing performed by the laser processing apparatus, and make a transition to Step 610.

Next, in Step 622 (S622), the controller 60 may stop the output of the oscillation trigger signal. More specifically, because the determination as to the stopping of the processing performed by the laser processing apparatus has been made in the Step 620, the controller 60 may stop the output of the oscillation trigger signal. Thereby, the outputting of the pieces of laser light from the laser light source 10 may be stopped as well.

Next, in Step 624 (S624), the controller 60 may determine whether or not to change a processing position of the silica glass substrate as the workpiece 70. A transition may be made to Step 626 when a determination is made in the controller 60 to change the processing position of the silica glass substrate as the workpiece 70. On the other hand, the processing performed by the laser processing apparatus may be ended when a determination is made in the controller 60 not to change the processing position of the silica glass substrate as the workpiece 70.

Next, in Step 626 (S626), the controller 60 may move the XYZ stage 50 to move the processing position of the silica glass substrate as the workpiece 70, i.e., to move a position to be irradiated with the pieces of pulsed laser light of the silica glass substrate as the workpiece 70.

This laser processing method makes it possible for the laser light source 10 to so set the respective pulse energies P1 and P2 of the pieces of pulsed laser light at the respective two wavelengths ($\lambda$1 and ($\lambda$2) as to allow the absorption in the workpiece 70 of the pieces of pulsed laser light to be increased with the elapse of processing time. Hence, the absorption in the workpiece of the pulsed laser light is larger than that in a case where laser processing is performed using a single wavelength, which may allow for reduction of processing time.

8. Additional Notes

Additional Note (1):

A laser processing apparatus, including:

a laser light source configured to output pulsed laser light with an intensity peak in a wavelength range from 8 $\mu$m to 11 $\mu$m and a pulse width of 30 ns or less; an optical system configured to condense the pulsed laser light toward a workpiece and allow the workpiece to be irradiated with the condensed pulsed laser light; and a controller configured to control a repetition frequency of the pulsed laser light that is to be outputted from the laser light source to be 25 kHz or greater.

Additional Note (2):

The laser processing apparatus according to Additional Note (1), wherein the workpiece is made of a material containing silicon dioxide.

Additional Note (3):

The laser processing apparatus according to Additional Note (1) or (2), wherein the laser light source includes a master oscillator and an amplifier, the master oscillator being configured to output the pulsed laser light, and the amplifier being configured to amplify a light intensity of the pulsed laser light outputted from the master oscillator.

Additional Note (4):

The laser processing apparatus according to any one of Additional Notes (1) to (3), wherein the master oscillator includes a quantum cascade laser including a wavelength selective element, the wavelength selective element allowing any of wavelengths in a range from 8 $\mu$m to 11 $\mu$m to be selected, and the amplifier contains $CO_2$ gas as a laser medium.

Additional Note (5):

The laser processing apparatus according to any one of Additional Notes (1) to (3), wherein the master oscillator includes a wavelength selective element and a Q switch, and contains $CO_2$ gas as a laser medium, the wavelength selective element allowing any of wavelengths in a range from 9 $\mu$m to 11 $\mu$m to be selected, and the amplifier contains $CO_2$ gas as a laser medium.

Additional Note (6):

The laser processing apparatus according to any one of Additional Notes (1) to (3), further including a temperature measuring section configured to measure a temperature of a region on the workpiece, the region being irradiated with the pulsed laser light, wherein the controller determines a wavelength at which an absorption coefficient of the workpiece is maximum, the absorption coefficient corresponding to the temperature measured by the measuring section, and the laser light source is configured to allow the pulsed laser light therefrom to be varied in wavelength from 8 $\mu$m to 11 $\mu$m, and output the laser light of the wavelength determined by the controller.

Additional Note (7):

The laser processing apparatus according to any one of Additional Notes (1) to (3), wherein the laser light source outputs first pulsed laser light and second pulsed laser light, the first pulsed laser light being of a wavelength in a range from 8 $\mu$m to 10 $\mu$m, and the second pulsed laser light being of a wavelength in a range from 10 $\mu$m to 11 $\mu$m.

Additional Note (8):

A laser processing method, including:

causing a laser light source to output pulsed laser light with an intensity peak in a wavelength range from 8 $\mu$m to 11 $\mu$m, a pulse width of 30 ns or less, and a repetition frequency in a range from 25 kHz to 200 kHz; and performing irradiation onto a workpiece with the pulsed laser light outputted from the laser light source, the workpiece being made of a material containing silicon dioxide.

Additional Note (9):

The laser processing method according to Additional Note (8), wherein the repetition frequency ranges from 50 kHz to 200 kHz.

Additional Note (10):

The laser processing method according to Additional Note (8), wherein the repetition frequency ranges from 100 kHz to 200 kHz.

Additional Note (11):

The laser processing method according to any one of Additional Notes (8) to (10), further including heating the workpiece up to a temperature at 400°C or higher and equal to or lower than a glass transition point of the workpiece,
wherein the irradiation on the workpiece with the pulsed laser light is performed under a heated state of the workpiece at the temperature of 400°C or higher and equal to or lower than the glass transition point of the workpiece.

Additional Note (12):

The laser processing method according to any one of Additional Notes (8) to (11), wherein a minimum pulse interval of the pulsed laser light is 10 $\mu$s or less.

The foregoing description is intended to be merely illustrative rather than limiting. It should therefore be appreciated that variations may be made in embodiments of the disclosure by persons skilled in the art without departing from the scope as defined by the appended claims.

The terms used throughout the specification and the appended claims are to be construed as "open-ended" terms. For example, the term "includes/include/including" or "included" is to be construed as "including but not limited to". The term "has/have/having" is to be construed as "having but not limited to". Also, the indefinite article "a/an" described in the specification and recited in the appended claims is to be construed to mean "at least one" or "one or more".

This application claims the priority benefit of Japanese Patent Application No. 2012-254475 filed on November 20, 2012, and the entire content of Japanese Patent Application No. 2012-254475 is hereby incorporated by reference.

Reference Signs List

10      Laser light source

| | |
|---|---|
| 20 | Optical path pipe |
| 30 | Frame |
| 40 | Optical system |
| 41 | First highly-reflective mirror |
| 42 | Second highly-reflective mirror |
| 43 | Third highly-reflective mirror |
| 44 | Laser condensing optical member |
| 50 | XYZ stage |
| 51 | Table |
| 60 | Controller |
| 61 | Pulse oscillator |
| 62 | Memory section |
| 70 | Workpiece |
| 71 | Opening |
| 71a | Sidewall |
| 110 | MO |
| 111 | MO chamber |
| 112 | Highly-reflective mirror |
| 113 | MO power supply |
| 114 | Output coupling mirror |
| 115a | Rear window |
| 115b | Front window |
| 116a | Electrode |
| 116b | Electrode |
| 120 | Q switch |
| 121 | Polarizer |
| 122 | EO Pockels cell |
| 123 | EO power supply |
| 130 | PA |
| 131 | PA chamber |
| 133 | PA power supply |
| 135a | Entrance window |
| 135b | Exit window |
| 136a | Electrode |
| 136b | Electrode |
| 140 | Monitor module |
| 141 | Beam splitter |
| 142 | Energy sensor |
| 150 | Laser controller |

**Claims**

**1.** A laser processing apparatus, comprising:

a laser light source configured to output pulsed laser light with an intensity peak in a wavelength range from 8 $\mu$m to 11 $\mu$m and a pulse width of 30 ns or less;
an optical system configured to condense the pulsed laser light toward a workpiece and allow the workpiece to be irradiated with the condensed pulsed laser light; and
a controller configured to control a repetition frequency of the pulsed laser light that is to be outputted from the laser light source to be 25 kHz or greater.

**2.** The laser processing apparatus according to claim 1, wherein the workpiece is made of a material containing silicon dioxide.

**3.** The laser processing apparatus according to claim 1, wherein the laser light source includes a master oscillator and an amplifier, the master oscillator being configured to output the pulsed laser light, and the amplifier being configured to amplify a light intensity of the pulsed laser light outputted from the master oscillator.

**4.** The laser processing apparatus according to claim 1, wherein
the master oscillator includes a quantum cascade laser including a wavelength selective element, the wavelength selective element allowing any of wavelengths in a range from 8 $\mu$m to 11 $\mu$m to be selected, and
the amplifier contains $CO_2$ gas as a laser medium.

**5.** The laser processing apparatus according to claim 1, wherein
the master oscillator includes a wavelength selective element and a Q switch, and contains $CO_2$ gas as a laser medium, the wavelength selective element allowing any of wavelengths in a range from 9 $\mu$m to 11 $\mu$m to be selected, and
the amplifier contains $CO_2$ gas as a laser medium.

**6.** The laser processing apparatus according to claim 1, further comprising a temperature measuring section configured to measure a temperature of a region on the workpiece, the region being irradiated with the pulsed laser light, wherein
the controller determines a wavelength at which an absorption coefficient of the workpiece is maximum, the absorption coefficient corresponding to the temperature measured by the measuring section, and
the laser light source is configured to allow the pulsed laser light therefrom to be varied in wavelength from 8 $\mu$m to 11 $\mu$m, and output the laser light of the wavelength determined by the controller.

**7.** The laser processing apparatus according to claim 1, wherein the laser light source outputs first pulsed laser light and second pulsed laser light, the first pulsed laser light being of a wavelength in a range from 8 $\mu$m to 10 $\mu$m, and the second pulsed laser light being of a wavelength in a range from 10 $\mu$m to 11 $\mu$m.

**8.** A laser processing method, comprising:

causing a laser light source to output pulsed laser light with an intensity peak in a wavelength range from 8 $\mu$m to 11 $\mu$m, a pulse width of 30 ns or less, and a repetition frequency in a range from 25 kHz to 200 kHz; and
performing irradiation onto a workpiece with the pulsed laser light outputted from the laser light source, the workpiece being made of a material containing silicon dioxide.

**9.** The laser processing method according to claim 8, wherein the repetition frequency ranges from 50 kHz to 200 kHz.

**10.** The laser processing method according to claim 8, wherein the repetition frequency ranges from 100 kHz to 200 kHz.

**11.** The laser processing method according to claim 8, further comprising heating the workpiece up to a temperature at 400°C or higher and equal to or lower than a glass transition point of the workpiece, wherein the irradiation on the workpiece with the pulsed laser light is performed under a heated state of the workpiece at the temperature of 400°C or higher and equal to or lower than the glass transition point of the workpiece.

**12.** The laser processing method according to claim 8, wherein a minimum pulse interval of the pulsed laser light is 10 $\mu$s or less.

[ FIG. 1 ]

[ FIG. 2 ]

[ FIG. 3 ]

EP 2 924 820 A1

SETTING OF TARGET PULSE ENERGY

OSCILLATION TRIGGER

60

61

43

42

30

44

20

10

70

51

50

40

41

[ FIG. 4 ]

[ FIG. 5 ]

[ FIG. 6 ]

[ FIG. 7 ]

[ FIG. 8 ]

[ FIG. 9 ]

[ FIG. 10 ]

1,100 × 9.08 μm WD:22.1mm 1.7kV 2012/09/09 12:22:54 S

[ FIG. 11 ]

[ FIG. 12 ]

EP 2 924 820 A1

```
                    ┌─────────────┐
                    │    START    │
                    └─────────────┘
                           │
                           ▼                                    ⟋S102
  ┌──────────────────────────────────────────────────────────────┐
  │   SEND TARGET PULSE ENERGY Pt TO LASER LIGHT SOURCE           │
  └──────────────────────────────────────────────────────────────┘
                           │                                    ⟋S104
  ┌──────────────────────────────────────────────────────────────┐
  │   OUTPUT OSCILLATION TRIGGER ON THE                          │
  │   BASIS OF REPETITION FREQUENCY f                            │
  └──────────────────────────────────────────────────────────────┘
                           │                                    ⟋S106
  ┌──────────────────────────────────────────────────────────────┐
  │              EMIT PULSED LASER LIGHT                          │
  └──────────────────────────────────────────────────────────────┘
                           │                                    ⟋S108
                    ◇ STOP LASER PROCESSING? ◇
              NO                           YES
                                            │                   ⟋S110
                              ┌──────────────────────────────┐
  ⟋S114                       │  STOP OUTPUT OF OSCILLATION    │
  ┌───────────────────┐       │          TRIGGER              │
  │   MOVE XYZ STAGE   │       └──────────────────────────────┘
  └───────────────────┘                    │                   ⟋S112
              YES          ◇ CHANGE PROCESSING POSITION? ◇
                                           │ NO
                                    ┌─────────────┐
                                    │     END     │
                                    └─────────────┘
```

[ FIG. 13 ]

EP 2 924 820 A1

SETTING OF TARGET PULSE ENERGY

OSCILLATION TRIGGER

MO

PA

OUTPUT

[ FIG. 14 ]

[ FIG. 15 ]

| WAVELENGTH AT WHICH REFLECTIVITY OF MIRROR IN OPTICAL RESONATOR IS MAXIMUM ($\mu$ m) | 9.3 | 9.6 | 10.2 | 10.6 |
|---|---|---|---|---|
| LINE FOR LASER OSCILLATION | 9R(20) | 9P(24) | 10R(20) | 10P(20) |
| WAVELENGTH OF OUTPUT PULSED LASER LIGHT ($\mu$ m) | 9.27 | 9.59 | 10.24 | 10.59 |

36

[ FIG. 16 ]

[ FIG. 17 ]

[ FIG. 18 ]

[ FIG.19 ]

SETTING OF TARGET PULSE ENERGIES AND SETTING OF TWO TARGET WAVELENGTHS

OSCILLATION TRIGGER

EP 2 924 820 A1

[ FIG. 20 ]

FIG. 21

SETTING OF PULSE ENERGY P1 FOR λ1 AND PULSE ENERGY P2 FOR λ2

OSCILLATION TRIGGER

311    10.6 μm
MO1         PA
9.3 μm
MO2         PA

EP 2 924 820 A1

[ FIG.22 ]

SETTING OF TARGET PULSE ENERGIES AND SETTING OF TARGET WAVELENGTHS

OSCILLATION TRIGGER

OUTPUT

EP 2 924 820 A1

EP 2 924 820 A1

[ FIG. 23 ]

44

[ FIG. 24 ]

[ FIG. 25 ]

[ FIG. 26 ]

EP 2 924 820 A1

```
                        ( START )
                            │                    ⌐S202
                            ▼
        SEND TARGET PULSE ENERGY Pt TO LASER LIGHT SOURCE
                            │
                            ▼
              SET TEMPERATURE SET IN TEMPERATURE
              CONTROLLER TO TARGET TEMPERATURE Tt
                            │                    ⌐S204
                            ▼        ⌐S206
         NO    ◇─────────────────────────────◇
        ◄──────      ΔTr<|Tt−T|?
               ◇─────────────────────────────◇
                            │ YES              ⌐S208
                            ▼
               OUTPUT OSCILLATION TRIGGER ON THE
               BASIS OF REPETITION FREQUENCY f
                            │
                            ▼
                  EMIT PULSED LASER LIGHT
                            │                    ⌐S210
                            ▼        ⌐S212
         NO    ◇─────────────────────────────◇
        ◄──────      STOP LASER PROCESSING?
               ◇─────────────────────────────◇
                            │ YES              ⌐S214
        ⌐S218               ▼
   ┌──────────────┐  STOP OUTPUT OF OSCILLATION TRIGGER
   │ MOVE XYZ     │              │                 ⌐S216
   │ STAGE        │              ▼
   └──────────────┘  ◇─────────────────────────────◇
        ▲      YES     CHANGE PROCESSING POSITION?
        └──────────── ◇─────────────────────────────◇
                            │ NO
                            ▼
                        ( END )
```

[ FIG. 27 ]

[ FIG. 28 ]

[ FIG. 29 ]

[ FIG. 30 ]

WAVELENGTH $\lambda$ mx AT WHICH
ABSORPTION COEFFICIENT
IS MAXIMUM

$\lambda$ mx=G(t, f, P)

PROCESSING TIME t

[ FIG. 31 ]

```
                          ┌─────────────┐
                          │    START    │
                          └──────┬──────┘
                                 │                          ╭─S302
        ┌────────────────────────▼────────────────────────┐
        │  SEND TARGET PULSE ENERGY Pt TO LASER LIGHT SOURCE │
        └────────────────────────┬────────────────────────┘
                                 │                          ╭─S304
        ┌────────────────────────▼────────────────────────┐
        │          OUTPUT OSCILLATION TRIGGER ON THE        │
        │          BASIS OF REPETITION FREQUENCY f          │
        └────────────────────────┬────────────────────────┘
                                 │                          ╭─S306
        ┌────────────────────────▼────────────────────────┐
        │   RESET TIMER OF PROCESSING TIME t AND START TIMER │
        └────────────────────────┬────────────────────────┘
                                 │                          ╭─S308
        ┌────────────────────────▼────────────────────────┐
        │             COUNT PROCESSING TIME t               │
        └────────────────────────┬────────────────────────┘
                                 │                          ╭─S310
        ┌────────────────────────▼────────────────────────┐
        │   READ OUT RELATIONAL EXPRESSION λmx=G(t,f,P)     │
        └────────────────────────┬────────────────────────┘
                                 │                          ╭─S312
        ┌────────────────────────▼────────────────────────┐
        │  DETERMINE TARGET WAVELENGTH λmxt AT WHICH ABSORPTION │
        │  COEFFICIENT IS MAXIMUM ON THE BASIS OF λmxt=G(t,f,Pt) │
        └────────────────────────┬────────────────────────┘
                                 │                          ╭─S314
        ┌────────────────────────▼────────────────────────┐
        │  SEND TARGET WAVELENGTH λmxt TO LASER LIGHT SOURCE │
        └────────────────────────┬────────────────────────┘
                                 │                          ╭─S316
        ┌────────────────────────▼────────────────────────┐
        │             EMIT PULSED LASER LIGHT               │
        └────────────────────────┬────────────────────────┘
```

S302: SEND TARGET PULSE ENERGY Pt TO LASER LIGHT SOURCE

S304: OUTPUT OSCILLATION TRIGGER ON THE BASIS OF REPETITION FREQUENCY f

S306: RESET TIMER OF PROCESSING TIME t AND START TIMER

S308: COUNT PROCESSING TIME t

S310: READ OUT RELATIONAL EXPRESSION $\lambda mx = G(t, f, P)$

S312: DETERMINE TARGET WAVELENGTH $\lambda mxt$ AT WHICH ABSORPTION COEFFICIENT IS MAXIMUM ON THE BASIS OF $\lambda mxt = G(t, f, Pt)$

S314: SEND TARGET WAVELENGTH $\lambda mxt$ TO LASER LIGHT SOURCE

S316: EMIT PULSED LASER LIGHT

S318: STOP LASER PROCESSING? — NO

S324: MOVE XYZ STAGE

S320: STOP OUTPUT OF OSCILLATION TRIGGER — YES

S322: CHANGE PROCESSING POSITION? — YES / NO

END

SETTING OF TARGET PULSE ENERGY AND
SETTING OF TARGET WAVELENGTH

OSCILLATION TRIGGER

[ FIG. 32 ]

EP 2 924 820 A1

[ FIG. 33 ]

WAVELENGTH $\lambda$mx AT WHICH
ABSORPTION COEFFICIENT
IS MAXIMUM

$\lambda$ mx=F(T)

TEMPERATURE T

[ FIG. 34 ]

[ FIG. 35 ]

SETTING OF TARGET PULSE ENERGIES FOR RESPECTIVE WAVELENGTHS
SETTING OF TARGET WAVELENGTHS FOR RESPECTIVE WAVELENGTHS

OSCILLATION TRIGGER

[ FIG. 36 ]

```
                           ┌──────────────┐
                           │    START     │
                           └──────┬───────┘
                                  ▼
S502 ┌──────────────────────────────────────────────────┐
     │                    P1t=P1i                         │
     │                    P2t=0                            │
     └──────────────────────────────────────────────────┘
                                  ▼
S504 ┌──────────────────────────────────────────────────┐
     │         SEND TARGET PULSE ENERGIES P1t             │
     │         AND P2t TO LASER LIGHT SOURCE              │
     └──────────────────────────────────────────────────┘
                                  ▼
S506 ┌──────────────────────────────────────────────────┐
     │         SEND TARGET WAVELENGTHS λ1t AND            │
     │         λ2t TO LASER LIGHT SOURCE                  │
     └──────────────────────────────────────────────────┘
                                  ▼
S508 ┌──────────────────────────────────────────────────┐
     │         OUTPUT OSCILLATION TRIGGER ON THE          │
     │         BASIS OF REPETITION FREQUENCY f            │
     └──────────────────────────────────────────────────┘
                                  ▼
S510 ┌──────────────────────────────────────────────────┐
     │   RESET TIMER OF PROCESSING TIME t AND START TIMER │
     └──────────────────────────────────────────────────┘
                                  ▼
S512 ┌──────────────────────────────────────────────────┐
     │             COUNT PROCESSING TIME t                │
     └──────────────────────────────────────────────────┘
                                  ▼
S514 ┌──────────────────────────────────────────────────┐
     │         READ OUT RELATIONAL EXPRESSIONS            │
     │         P1=G(t,f,λ1mx) AND P2=G(t,f,λ2mx)          │
     └──────────────────────────────────────────────────┘
                                  ▼
S516 ┌──────────────────────────────────────────────────┐
     │     DETERMINE TARGET PULSE ENERGIES P1t AND        │
     │     P2t ON THE BASIS OF RELATIONAL EXPRESSIONS     │
     │     P1t=G(t,f,λ1mx) AND P2t=G(t,f,λ2mx)            │
     └──────────────────────────────────────────────────┘
                                  ▼
S518 ┌──────────────────────────────────────────────────┐
     │         SEND TARGET PULSE ENERGIES P1t             │
     │         AND P2t TO LASER LIGHT SOURCE              │
     └──────────────────────────────────────────────────┘
                                  ▼
S520 ┌──────────────────────────────────────────────────┐
     │             EMIT PULSED LASER LIGHT                │
     └──────────────────────────────────────────────────┘
                                  ▼
                     NO    ╱────────────────╲  S522
                  ◄────────  STOP LASER PROCESSING?
                           ╲────────────────╱
S528                              │ YES
┌─────────┐                       ▼                  S524
│  MOVE   │         ┌──────────────────────────────────────┐
│  XYZ    │         │ STOP OUTPUT OF OSCILLATION TRIGGER    │
│  STAGE  │         └──────────────────────────────────────┘
└─────────┘                       ▼
     ▲           YES    ╱──────────────────╲  S526
     └───────────────────  CHANGE PROCESSING POSITION?
                          ╲──────────────────╱
                                  │ NO
                                  ▼
                           ┌──────────────┐
                           │     END      │
                           └──────────────┘
```

[ FIG. 37 ]

PULSE ENERGIES
P1 AND P2

P1=G(t, f, $\lambda$1mx)          P2=G(t, f, $\lambda$2mx)

PROCESSING TIME t

[ FIG. 38 ]

```
                        ┌─────────────┐
                        │    START    │
                        └──────┬──────┘
                               ▼
S602 ──┌────────────────────────────────────────────────┐
       │                   P1t=P1i                        │
       │                   P2t=0                          │
       └────────────────────────┬───────────────────────┘
                                ▼
S604 ──┌────────────────────────────────────────────────┐
       │       SEND TARGET PULSE ENERGIES P1t            │
       │       AND P2t TO LASER LIGHT SOURCE             │
       └────────────────────────┬───────────────────────┘
                                ▼
S606 ──┌────────────────────────────────────────────────┐
       │       OUTPUT OSCILLATION TRIGGER ON THE         │
       │       BASIS OF REPETITION FREQUENCY f           │
       └────────────────────────┬───────────────────────┘
                                ▼
S608 ──┌────────────────────────────────────────────────┐
       │  RESET TIMER OF PROCESSING TIME t AND START TIMER│
       └────────────────────────┬───────────────────────┘
                                ▼
S610 ──┌────────────────────────────────────────────────┐
       │            COUNT PROCESSING TIME t              │
       └────────────────────────┬───────────────────────┘
                                ▼
S612 ──┌────────────────────────────────────────────────┐
       │       READ OUT RELATIONAL EXPRESSIONS           │
       │       P1=G1(t,f) AND P2=G2(t,f)                 │
       └────────────────────────┬───────────────────────┘
                                ▼
S614 ──┌────────────────────────────────────────────────┐
       │  DETERMINE TARGET PULSE ENERGIES P1t AND        │
       │  P2t ON THE BASIS OF RELATIONAL EXPRESSIONS     │
       │  P1t=G1(t,f) AND P2t=G2(t,f)                    │
       └────────────────────────┬───────────────────────┘
                                ▼
S616 ──┌────────────────────────────────────────────────┐
       │       SEND TARGET PULSE ENERGIES P1t            │
       │       AND P2t TO LASER LIGHT SOURCE             │
       └────────────────────────┬───────────────────────┘
                                ▼
S618 ──┌────────────────────────────────────────────────┐
       │           EMIT PULSED LASER LIGHT               │
       └────────────────────────┬───────────────────────┘
```

$P1t = P1i$
$P2t = 0$

SEND TARGET PULSE ENERGIES P1t AND P2t TO LASER LIGHT SOURCE

OUTPUT OSCILLATION TRIGGER ON THE BASIS OF REPETITION FREQUENCY f

RESET TIMER OF PROCESSING TIME t AND START TIMER

COUNT PROCESSING TIME t

READ OUT RELATIONAL EXPRESSIONS P1=G1(t,f) AND P2=G2(t,f)

DETERMINE TARGET PULSE ENERGIES P1t AND P2t ON THE BASIS OF RELATIONAL EXPRESSIONS P1t=G1(t,f) AND P2t=G2(t,f)

SEND TARGET PULSE ENERGIES P1t AND P2t TO LASER LIGHT SOURCE

EMIT PULSED LASER LIGHT

S620  STOP LASER PROCESSING?  — NO

YES

S622  STOP OUTPUT OF OSCILLATION TRIGGER

S624  CHANGE PROCESSING POSITION?  — YES

NO

S626  MOVE XYZ STAGE

END

[ FIG. 39 ]

PULSE ENERGIES
P1 AND P2

P1=G1(t, f)          P2=G2(t, f)

PROCESSING TIME t

**INTERNATIONAL SEARCH REPORT**

| International application No. |
| --- |
| PCT/JP2013/080727 |

A. CLASSIFICATION OF SUBJECT MATTER
*H01S3/115*(2006.01)i, *B23K26/00*(2014.01)i, *B23K26/064*(2014.01)i, *C03B33/02*
(2006.01)i, *C03B33/08*(2006.01)i, *H01S3/00*(2006.01)i, *H01S3/10*(2006.01)i,
*H01S3/23*(2006.01)i, *B23K26/382*(2014.01)n, *B23K26/40*(2014.01)n,

According to International Patent Classification (IPC) or to both national classification and IPC

B. FIELDS SEARCHED

Minimum documentation searched (classification system followed by classification symbols)
H01S3/115, B23K26/00, B23K26/064, C03B33/02, C03B33/08, H01S3/00,
H01S3/10, H01S3/23, B23K26/382, B23K26/40, B28D5/00

Documentation searched other than minimum documentation to the extent that such documents are included in the fields searched
| Jitsuyo Shinan Koho | 1922–1996 | Jitsuyo Shinan Toroku Koho | 1996–2014 |
| Kokai Jitsuyo Shinan Koho | 1971–2014 | Toroku Jitsuyo Shinan Koho | 1994–2014 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| Y<br>A | JP 2009-246345 A (Komatsu Ltd.),<br>22 October 2009 (22.10.2009),<br>paragraphs [0029] to [0052], [0101]; fig. 1 to 2<br>& US 2009/0232171 A1 & DE 102009012106 A | 1-5,7-10<br>6,11-12 |
| Y<br>A | JP 2011-192961 A (Komatsu Ltd.),<br>29 September 2011 (29.09.2011),<br>paragraphs [0010] to [0019]; fig. 1<br>& US 2011/0309270 A1 & WO 2011/102534 A2<br>& TW 201141315 A & KR 10-2013-0036174 A | 1-5,7-10<br>6,11-12 |
| Y<br>A | JP 2012-134433 A (Komatsu Ltd.),<br>12 July 2012 (12.07.2012),<br>paragraphs [0065], [0147]; fig. 1<br>& US 2012/0243566 A1 & WO 2011/102277 A1<br>& KR 10-2013-0008539 A | 2,8-10<br>6,11-12 |

| ☒ Further documents are listed in the continuation of Box C. | ☐ See patent family annex. |
| --- | --- |

| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>    06 January, 2014 (06.01.14) | Date of mailing of the international search report<br>    21 January, 2014 (21.01.14) |
| --- | --- |
| Name and mailing address of the ISA/<br>    Japanese Patent Office | Authorized officer |
| Facsimile No. | Telephone No. |

Form PCT/ISA/210 (second sheet) (July 2009)

**INTERNATIONAL SEARCH REPORT**

International application No.

PCT/JP2013/080727

C (Continuation).   DOCUMENTS CONSIDERED TO BE RELEVANT

| Category* | Citation of document, with indication, where appropriate, of the relevant passages | Relevant to claim No. |
|---|---|---|
| Y<br>A | JP 2012-11689 A  (Osaka University),<br>19 January 2012 (19.01.2012),<br>paragraph [0009]<br>(Family: none) | 4<br>6,11-12 |
| Y<br>A | JP 2007-98403 A  (Sunx Ltd.),<br>19 April 2007 (19.04.2007),<br>paragraphs [0044] to [0058]; fig. 1<br>(Family: none) | 5<br>6,11-12 |

Form PCT/ISA/210 (continuation of second sheet) (July 2009)

**INTERNATIONAL SEARCH REPORT**

| International application No. |
| --- |
| PCT/JP2013/080727 |

Continuation of A. CLASSIFICATION OF SUBJECT MATTER
 (International Patent Classification (IPC))

*B28D5/00*(2006.01)n

       (According to International Patent Classification (IPC) or to both national
       classification and IPC)

Form PCT/ISA/210 (extra sheet) (July 2009)

INTERNATIONAL SEARCH REPORT

International application No.

PCT/JP2013/080727

The invention in Claims 4 – 5 depends only on Claim 1 and sets limits on a "master oscillator."  However, there is no description of the "master oscillator" in Claim 1.
    Moreover, the first claim describing the "master oscillator" is the invention in Claim 3.  Therefore, this search report has been written assuming that Claims 4 – 5 depend only on Claim 3.

Form PCT/ISA/210 (extra sheet) (July 2009)

**EP 2 924 820 A1**

**Patent documents cited in the description**

- JP H11217237 B
- JP 2001354439 A
- JP 2002028799 A
- JP 2010524692 A
- JP 2012254475 A